# EUROPEAN PATENT APPLICATION

(11) **EP 1 750 357 A1**
(43) Date of publication of application: **07.02.2007**
(21) Application number: 06016374.8
(22) Date of filing: 04.08.2006
(51) Int. Cl.: H02K 21/00, B60K 6/02

(54) **Saddle-type vehicle provided with rotary electric machine**

(30) Priority: 05.08.2005 JP 2005228944; 03.03.2006 JP 2006058652
(71) Applicant: YAMAHA HATSUDOKI KABUSHIKI KAISHA, Iwata-shi, Shizuoka-ken 438-8501 (JP)
(72) Inventor: Hino, Haruyoshi, Iwata-shi Shizuoka-ken 438-8501 (JP); Nakajima, Masumi, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a saddle-type vehicle comprising a crankshaft, a crankcase housing the crankshaft, a crankcase cover attached to a side of the crankcase, and a rotary electric machine housed in the crankcase cover and connected to the crankshaft, wherein the rotary electric machine has a magnetic field varying mechanism for varying the intensity of a magnetic field in the rotary electric machine to change the output characteristics of the rotary electric machine, wherein the saddle-type vehicle further comprises an operation mechanism connected to the magnetic field varying mechanism for transmitting power to operate the magnetic field varying mechanism, and wherein the operation mechanism is supported by the crankcase cover.

## Description

The present invention relates to a saddle-type vehicle provided with a rotary electric machine the output characteristics of which can be changed and, more particularly, to the layout in a saddle-type vehicle.

In the field of saddle-type vehicles including motorcycles, vehicles provided with a rotary electric machine which not only functions as a power generator but also is attached to the crankshaft to assist the power of the engine have been developed.

In general, the output characteristics of a rotary electric machine such as rotational speed and torque are restricted within a narrow range because of the structure of the rotary electric machine. For example, a rotary electric machine having field magnets which generate a strong magnetic flux and capable of rotating at high torque cannot be driven at low torque and high speed whereas a rotary electric machine capable of rotating at low torque and high speed cannot be driven at high torque and low speed. This is because an induced electromotive force is generated in the coils when the magnetic flux from the field magnets flow across the coils and a magnetic flux generated by the induced electromotive force applies a force in the direction opposite the rotating direction of the rotor to the field magnets.

One known method to overcome the problem is to change the output characteristics by field-weakening control. In this method, electric power is supplied to the coils to generate a magnetic flux in a direction opposite the direction of the magnetic flux generated by the induced electromotive force when the magnetic flux from the field magnets flows across the coils. However, this method is not efficient since electric power which does not contribute to the rotation of the rotary electric machine must be supplied.

A rotary electric machine in which the magnetic flux generated therein is changed by mechanically displacing the rotor or stator to change the output characteristics has been proposed. For example, JP-A 2004-104943 discloses a radial gap type rotary electric machine, that is, a rotary electric machine provided with a rotor having field magnets arranged around the rotating shaft and a stator located in an axial direction of the rotor and surrounding the rotor. In the rotary electric machine, the intensity of the magnetic field is varied by moving the rotor along the rotating shaft relative to the stator to change the output characteristics.

When a rotary electric machine in which the rotor or stator can be mechanically displaced as disclosed in JP-A 2004-104943 is mounted on a vehicle, there arises a demand that the rotary electric machine is mounted without changing the layout of a conventional saddle-type vehicle driven only by the driving force of an engine.

It is, therefore, an object of the present invention is to provide a saddle-type vehicle provided with a rotary electric machine which has no large effect on the layout of the crankcase and the output characteristics of which can be changed by mechanically varying the intensity of magnetic field.

This objective is solved in an inventive manner by a saddle-type vehicle comprising a crankshaft; a crankcase housing the crankshaft; a crankcase cover attached to a side of the crankcase; and a rotary electric machine housed in the crankcase cover and connected to the crankshaft, wherein the rotary electric machine has a magnetic field varying mechanism for varying the intensity of a magnetic field in the rotary electric machine to change the output characteristics of the rotary electric machine; wherein the saddle-type vehicle further comprises an operation mechanism connected to the magnetic field varying mechanism for transmitting power to operate the magnetic field varying mechanism, and wherein the operation mechanism is supported by the crankcase cover.

Preferably, the saddle-type vehicle further comprises an actuator for generating the power to operate the magnetic field varying mechanism.

Further, preferably, the actuator is supported by the crankcase cover.

Further, preferably the power of the actuator is transmitted to the operation mechanism via a transmitting member.

Still further, preferably the operation mechanism is mounted on an output shaft of the actuator. Therein, the transmitting member may be a wire.

Yet further still, preferably the magnetic field varying mechanism has a first stator and a second stator, wherein the second stator is displaceable relative to the first stator to vary the intensity of the magnetic field.

Preferably, the operation mechanism is operatively linked with the second stator to transmit the power to displace the second stator.

According to an embodiment, the saddle-type vehicle further comprises a sensor for detecting the displacement of the second stator, wherein the sensor is attached to the operation mechanism to detect the displacement of the operation mechanism and outputs the displacement as information indicating the displacement of the second stator.

Preferably, the operation mechanism has a mark indicating a reference position within the range of movement of the operation mechanism.

Further, preferably the crankcase cover has a window through which the displacement of the second stator can be visually checked.

Further still, preferably the crankcase cover has a supporting portion for displaceably supporting the second stator.

In the following, the present invention is explained in greater detail with respect to several embodiments thereof in conjunction with the accompanying drawings, wherein:
- FIG. 1: is a side view of a motorcycle as an example of a saddle-type vehicle,
- FIG. 2: is a side view of a rear part of the motorcycle,
- FIG. 3: is a cross-sectional view taken along the line III-III of FIG. 2,
- FIG. 4: is an enlarged view of FIG. 3,
- FIG. 5: is an exploded perspective view of a rotary electric machine mounted on the motorcycle,
- FIG. 6: shows front view and rear view of a first stator of the rotary electric machine, with the front view showing the side of the first stator facing a rotor and the rear view showing the side of the first stator facing a second stator,
- FIG. 7: is a cross-sectional view taken along the line VII-VII of FIG. 6,
- FIG. 8: is a cross-sectional view taken along the line VIII-VIII of FIG. 6,
- FIG. 9: is a perspective view illustrating the side of the first stator facing the rotor,
- FIG. 10: is a perspective view illustrating the side of the first stator facing the second stator,
- FIG. 11: is a front view of the second stator, illustrating the side of the second stator facing the first stator,
- FIG. 12: is a cross-sectional view taken along the line XII-XII of FIG. 11,
- FIG. 13: is a cross-sectional view taken along the line XIII-XIII of FIG. 11,
- FIG. 14: is a perspective view illustrating the side of the second stator facing the first stator,
- FIG. 15: is a perspective view illustrating the side of the second stator opposite the side facing the first stator,
- FIG. 16: is a cross-sectional view taken along the line XVI-XVI of FIG. 2,
- FIG. 17: is a view illustrating the manner of rotation of the second stator,
- FIG. 18: is a view illustrating the changes in magnetic flux in the rotary electric machine,
- FIG. 19: shows a side view of a crankcase cover of a motorcycle according to another embodiment and an inside view of the crankcase cover,
- FIG. 20: is a cross-sectional view of a rotary electric machine mounted on a motorcycle according to the another embodiment,
- FIG. 21: shows a front view, a rear view and a cross-sectional view of a rotor of the rotary electric machine, with the front view showing the side of the rotor facing a first stator and the rear view showing the side of the rotor facing a flywheel,
- FIG. 22: is a front view of the flywheel of the motorcycle according to the another embodiment,
- FIG. 23: is a side view of a rear part of the motorcycle according to still another embodiment,
- FIG. 24: is an inside view of a crankcase cover of a motorcycle according to the still another embodiment,
- FIG. 25: is a cross-sectional view illustrating another example of a rotary electric machine provided with a magnetic field varying mechanism,
- FIG. 26: is an enlarged view of the rotary electric machine shown in FIG. 25, FIG. 27 is a view illustrating an example of a radial gap type rotary electric machine provided with a magnetic field varying mechanism,
- FIG. 28: is an exploded perspective view of the rotary electric machine shown in FIG. 27,
- FIG. 29: is an enlarged view of FIG. 27,
- FIG. 30: is a cross-sectional view illustrating another example of a radial gap type rotary electric machine,
- FIG. 31: is a cross-sectional view illustrating another example of a radial gap type rotary electric machine,
- FIG. 32: is an enlarged view of FIG. 31,
- FIG. 33: is a view illustrating another example of a radial gap type rotary electric machine.
- FIG. 34: is an exploded perspective view of the rotary electric machine shown in FIG. 33, and
- FIG. 35: is an enlarged view of FIG. 33.

### Description of Reference Numerals and Symbols:

- 1:: motorcycle
- 3:: front wheel
- 5:: front fork
- 6, 600:: stator rotating mechanism
- 7:: steering shaft
- 9:: handlebars
- 10:: body frame
- 13:: seat
- 15:: rear suspension
- 16:: rear arm
- 17:: rear wheel
- 19:: case cover
- 19a:: rotation supporting portion (supporting portion)
- 19d:: window
- 20:: rotary electric machine
- 21:: rotor
- 22:: yoke
- 23:: field magnet
- 25:: stator (magnetic field varying mechanism)
- 30:: first stator
- 31:: coil
- 34:: first teeth
- 36:: resin part of first stator
- 37:: engaging portion
- 38:: pin
- 39:: cutout
- 40:: second stator
- 41:: second teeth
- 42:: base
- 43:: resin part of second stator
- 45:: gear engaging portion
- 50:: engine
- 51:: crankshaft
- 52:: bearing
- 53:: oil-retaining bearing
- 55:: one-way clutch
- 56:: flywheel
- 57:: nut
- 60:: starter motor
- 61:: starting speed-reduction gear
- 62:: gear
- 63:: bearing
- 64:: bearing
- 66:: motor (actuator)
- 66a:: output shaft of motor
- 67:: wire (transmitting member)
- 68:: gear (operation mechanism)
- 68e:: mark
- 69:: rotational angle sensor
- 70:: rotor
- 71:: yoke
- 87:: circlip
- 100:: air cooling fin
- 101:: case
- 190:: crankcase
- 200:: rotary electric machine
- 225:: stator
- 240:: yoke
- 250:: stator
- 300:: first stator
- 330:: first stator
- 336:: resin part
- 337:: engaging portion
- 339:: cutout
- 360:: resin part of first stator
- 400:: second stator

- 430:: resin part of second stator
- 440:: second stator
- 443:: resin part
- 445:: gear engaging portion
- 450:: gear engaging portion
- 680:: worm gear (operation mechanism)

Description is hereinafter made of embodiments with reference to the drawings.

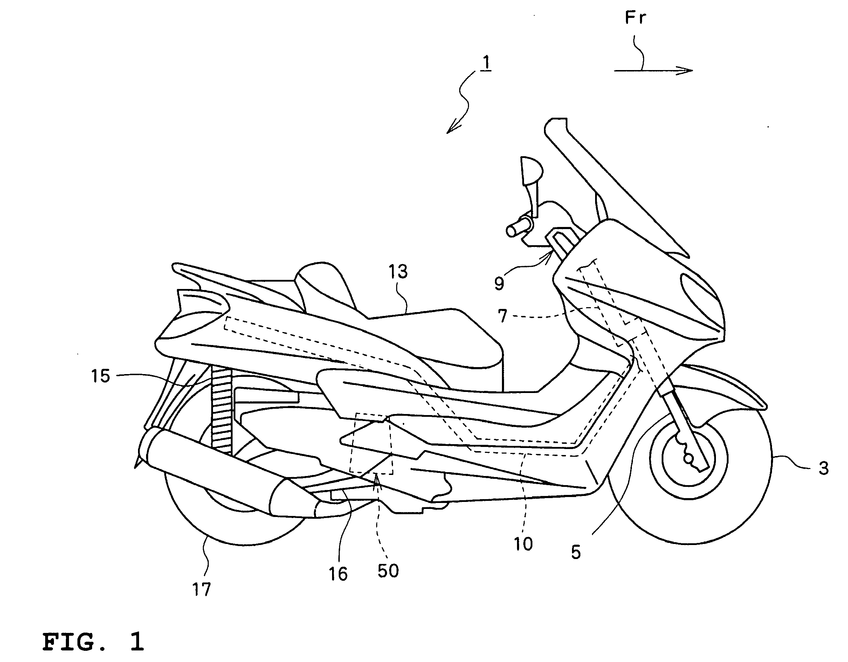

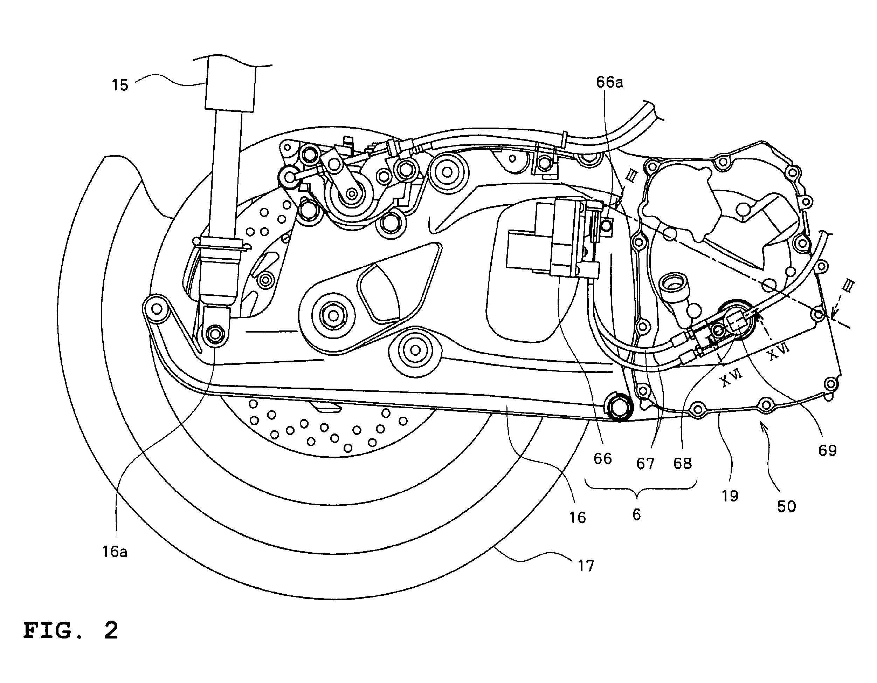

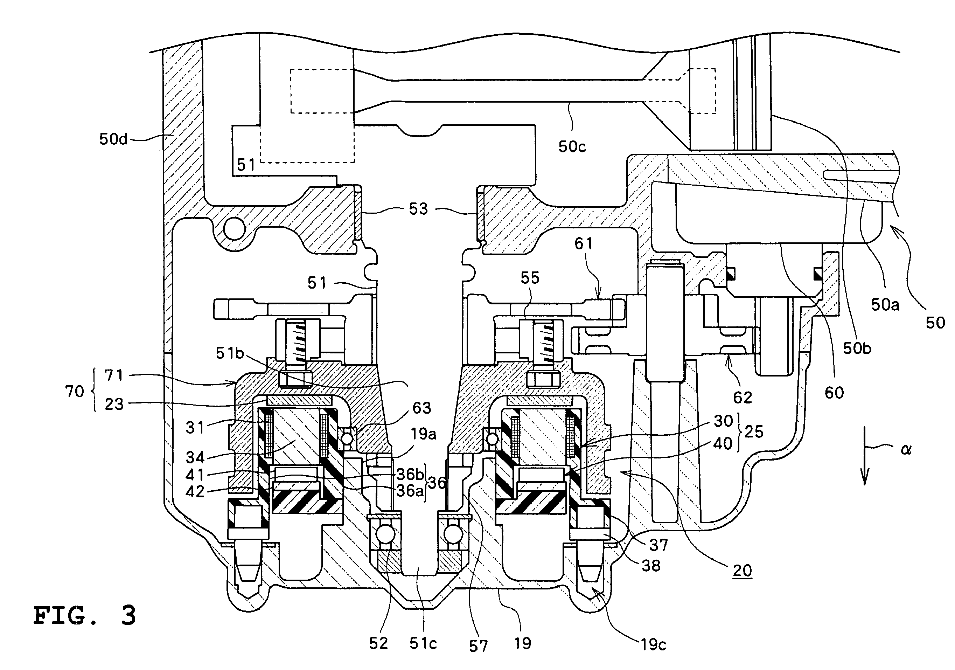

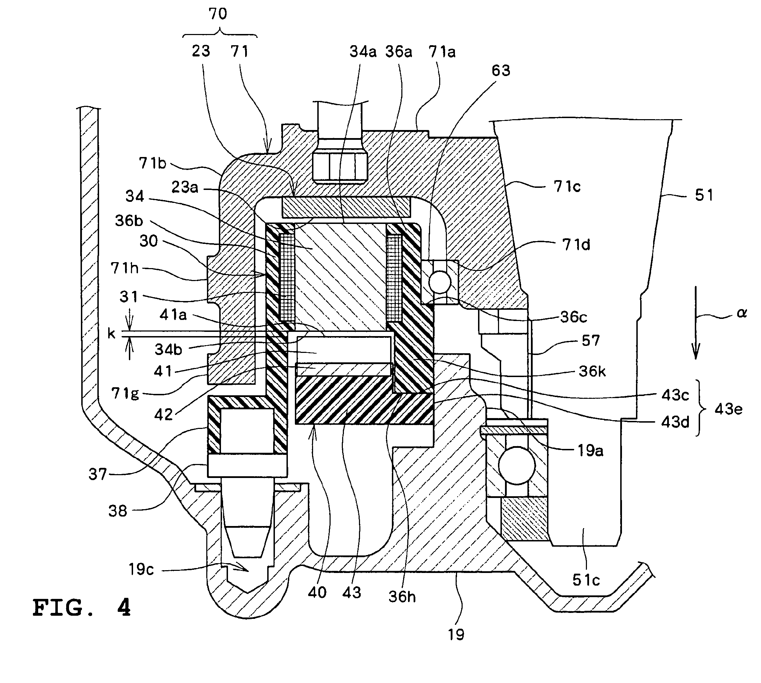

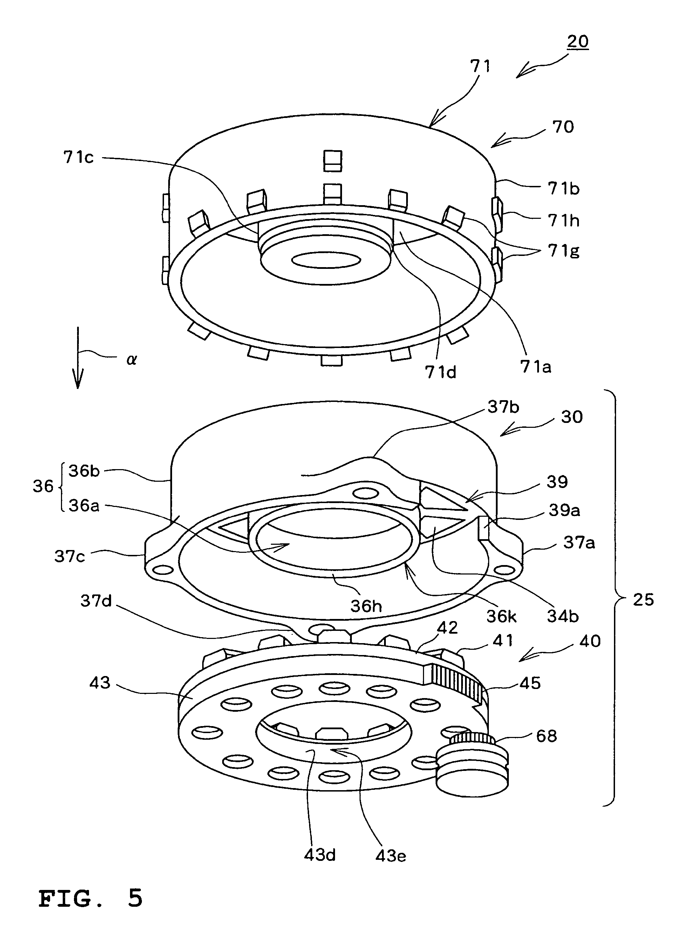

FIG. 1 is a side view of a motorcycle 1 as an embodiment. FIG. 2 is a side view of a rear part of the motorcycle 1, FIG. 3 is a cross-sectional view taken along the line III-III of FIG. 2, and FIG. 4 is an enlarged view of a rotary electric machine 20 shown in FIG. 3. FIG. 5 is an exploded perspective view of the rotary electric machine 20.

### General structure of vehicle body

As shown in FIG. 1, the motorcycle 1 has a front wheel 3 at a lower front part of its vehicle body. The front wheel 3 is rotatably supported at the lower end of a front fork 5. A steering shaft 7 extending upward is connected to the upper end of the front fork 5. Handlebars 9 extending in the vehicle width direction are attached to the upper end of the steering shaft 7. A body frame 10 is attached to an intermediate portion of the steering shaft 7.

The body frame 10 extends backward from a front part of the vehicle body, first obliquely downward and then horizontally. The body frame 10 then extends obliquely upward. A seat 13 is placed on an upper rear part of the body frame 10. To the rear end of the body frame 10 is connected the upper end of a rear suspension 15. The lower end of the rear suspension 15 is connected to a rear end 16a of a rear arm 16 (see FIG. 2). The rear arm 16 rotatably supports a rear wheel 17. The rear wheel 17 is rotatably driven by the driving force of an engine 50 transmitted via a driving force transmitting mechanism such as a belt-driven continuously variable transmission. The engine 50 is located below an intermediate portion of the body frame 10.

### Engine

The engine 50 has a cylinder 50a at its center. The cylinder 50a houses a piston 50b. The piston 50b is connected to the upper end of a connecting rod 50c, and a crankshaft 51 is attached to the lower end of the connecting rod 50c. The crankshaft 51 is an output shaft of the engine 50, and the driving force of the engine 50 is transmitted from the crankshaft 51 to the rear wheel 17 via the driving force transmitting mechanism.

A rotary electric machine 20 is disposed outside the engine 50 in the vehicle width direction (the side indicated by α in FIG. 3). The rotary electric machine 20 is attached to the crankshaft 51 (see FIG. 3). The rotary electric machine 20 assists the driving force of the engine 50 to drive the vehicle or drives the vehicle by its own driving force. The rotary electric machine 20 functions as a power generator when the amount of charge in a battery (not shown) is insufficient. The rotary electric machine 20 mounted on the vehicle of this embodiment has stator 25 having a first stator 30 and a second stator 40 facing the first stator 30. The first stator 30 and the second stator 40 constitute a magnetic field varying mechanism. The magnetic field varying mechanism varies the intensity of magnetic field by rotating the second stator 40 relative to the first stator 30 to change the output characteristics (see FIG. 3). As shown in FIG. 2, the motorcycle 1 has a stator rotating mechanism 6 for rotating the second stator 40. The stator 25 and the stator rotating mechanism 6 are described later in detail.

As shown in FIG. 3 or FIG. 4, a crankcase cover 19 (which is hereinafter referred to as "case cover") is attached to a side of a crankcase 50d. The case cover 19 supports a bearing 52, which rotatably supports the crankshaft 51. The proximal portion of the crankshaft 51 is rotatably supported by a bearing 53 which is supported by the crankcase 50d and forms an oil film between the bearing 53 and the crankshaft 51. The case cover 19 has a circular cylindrical rotation supporting portion (cylindrical portion) 19a surrounding an end 51 c of the crankshaft 51 and extending inward in the vehicle width direction (the direction from the end 51 c to the proximal side of the crankshaft 51). The rotation supporting portion 19a supports the stator 25 of the rotary electric machine 20, which is described later. The structure of the rotation supporting portion 19a for supporting the stator 25 is described later in detail.

A starting speed-reduction gear 61, a one-way clutch 55, and the rotary electric machine 20 are mounted on the crankshaft 51 in this order from the proximal side (the side to which the connecting rod 50c is connected) to the end 51c.

The starting speed-reduction gear 61 is connected to a starter motor 60 via a gear 62. When the engine is started, the driving force of the starter motor 60 is transmitted to the crankshaft 51 via the gear 62, the starting speed-reduction gear 61, the one-way clutch 55 and a yoke 71 of the rotary electric machine 20. When the start of the engine 50 is completed, the driving of the starter motor 60 is stopped and the one-way clutch 55 rotates independently from the starting speed-reduction gear 61 to shut off the transmission of the driving force to the starter motor 60. The starting speed-reduction gear 61 rotates independently from the crankshaft 51.

### Rotary electric machine

The rotary electric machine 20 is an axial gap type rotary electric machine, that is, a rotary electric machine in which a stator faces a rotor 70 along the axial direction of a rotating shaft (crankshaft 51). The rotary electric machine 20 is attached to the crankshaft 51 at a position outside the one-way clutch 55 in the vehicle width direction (the direction from the proximal side to the end 51c of the crankshaft 51) and housed in the case cover 19.

### Rotor

The rotary electric machine 20 has the rotor 70 and the stator 25 arranged in this order from the proximal side of the crankshaft 51. The rotor 70 has a generally cup-shaped yoke 71 and field magnets 23. The yoke 71 has a disk-shaped disk portion 71a, a cylindrical outer cylindrical portion 71b, and a cylindrical inner cylindrical portion 71c. The disk portion 71a has a through hole at its center, and the crankshaft 51 extends through the through hole. The outer cylindrical portion 71b extends from the outer periphery of the disk portion 71a toward the stator 25 along the axial direction of the crankshaft 51 (which is hereinafter referred to as "rotating shaft direction"). The inner cylindrical portion 71c extends from the edge of the through hole of the disk portion 71a in the rotating shaft direction.

The inside diameter of the inner cylindrical portion 71c gradually decreases toward the end 51 c of the crankshaft 51. The crankshaft 51 has a taper portion 51b which gradually decreases in diameter toward the end 51c. A nut 57 is fitted on the crankshaft 51 from outside of the yoke 71. The nut 57 presses the yoke 71 toward the proximal side of the crankshaft 51 and presses the inner peripheral surface of the inner cylindrical portion 71c of the yoke 71 against the outer peripheral surface of the taper portion 51b. The yoke 71 is thereby in frictional engagement with the crankshaft 51, and the driving force of the rotary electric machine 20 is transmitted to the crankshaft 51 from the yoke 71.

The disk portion 71a has a plurality of holes for bolt fixing arranged in a circle. The one-way clutch 55 has bolt holes for bolt fixing at positions corresponding to the holes of the disk portion 71a. Bolts are inserted in the holes of the disk portion 71a and the bolt holes corresponding to each other and fastened to fix the yoke 71 to the one-way clutch 55.

A plurality of field magnets 23 are attached to the side of the disk portion 71 a facing the stator 25 and arranged perpendicular to the rotating shaft. The field magnets 23 are arranged in a circle around the rotating shaft with their magnetic poles (N-pole and S-pole) alternating in polarity.

The outer cylindrical portion 71b has a large thickness and the yoke 71 functions also as a flywheel. A plurality of projections 71g and a plurality of projections 71h are formed on the outer peripheral surface of the outer cylindrical portion 71b. The projections 71g, which are used to detect the ignition timing of the engine 50, are arranged circumferentially at regular intervals (see FIG. 5). The projections 71h, which are used to detect the positions of the field magnets 23, are provided to the field magnets 23 with the same polarity (N-pole or S-pole).

### Magnetic field varying mechanism

As described before, the rotary electric machine 20 has a first stator 30 and a second stator 40 constituting a magnetic field varying mechanism. The second stator 40 faces the first stator 30 in the rotating shaft direction. The second stator 40 rotates around the axis of the crankshaft 51 (which is hereinafter referred to as "around the rotating shaft") to change the output characteristics of the rotary electric machine 20.

### First stator

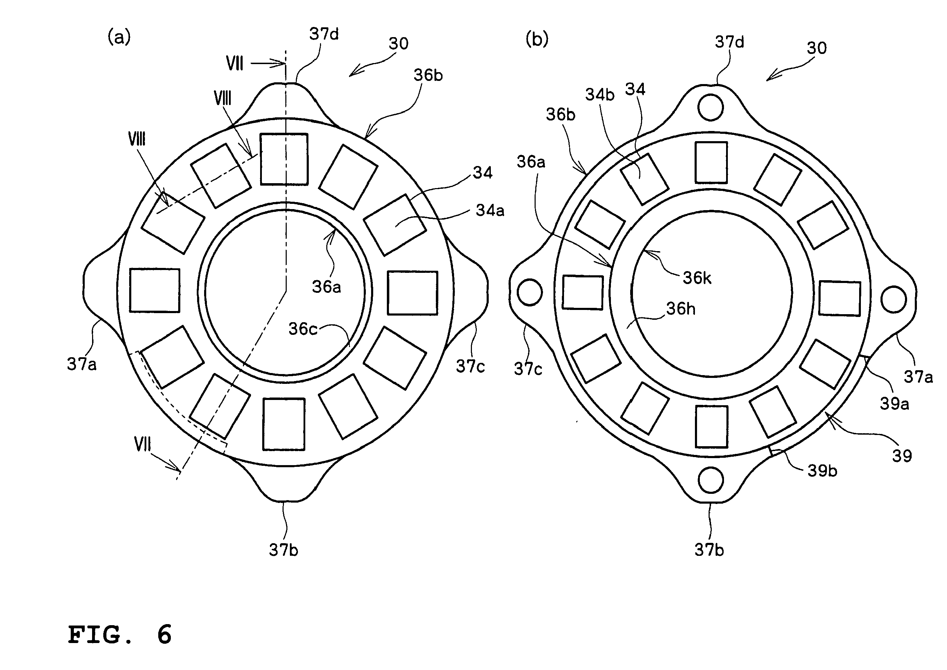

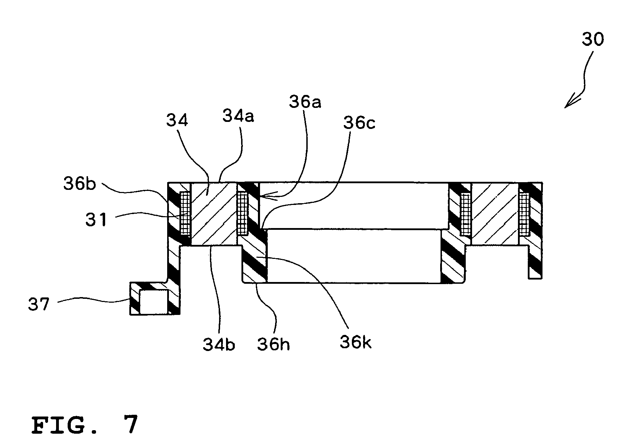

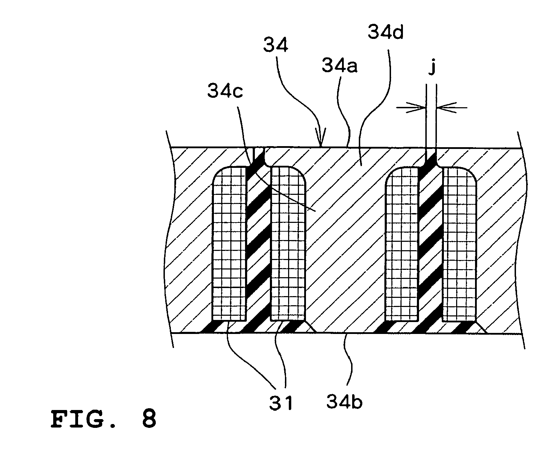

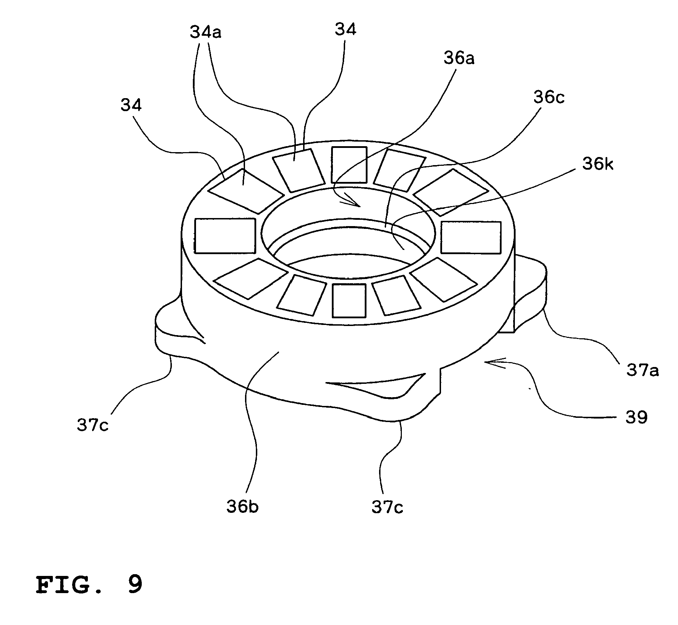

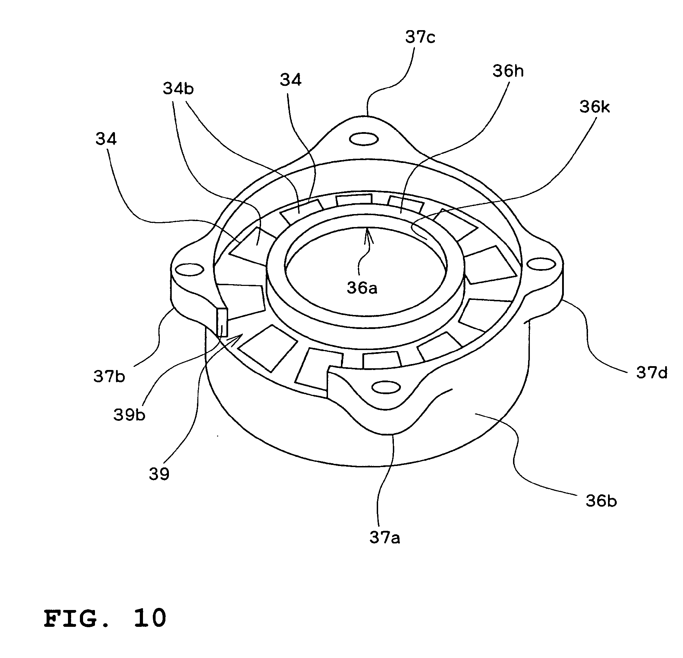

The first stator 30 and the second stator 40 constituting the magnetic field varying mechanism are hereinafter described. First, the first stator 30 is described in detail with reference to FIG. 3 to FIG. 10. FIG. 6(a) is a front view of the first stator 30, FIG. 6(b) is a rear view of the first stator 30, FIG. 7 is a cross-sectional view taken along the line VII-VII of FIG. 6, FIG. 8 is a cross-sectional view taken along the line VIII-VIII of FIG. 6, and FIG. 9 and FIG. 10 are perspective views of the first stator 30. FIG. 9 is a perspective view illustrating the side of the first stator 30 facing the rotor 70, and FIG. 10 is a perspective view illustrating the side of the first stator 30 facing the second stator 40.

The first stator 30 has a plurality of first teeth 34, and coils 31 wound around the first teeth 34. The first teeth 34 are made of iron and constitute a magnetic circuit in conjunction with the field magnets 23. The first teeth 34 and the coils 31 are molded by a resin part 36 made of a resin containing a lubricant. The first teeth 34 are arranged in a circle around the crankshaft 51, and the first stator 30 has a generally annular shape (see FIG. 6).

As shown in FIG. 8, each of the first teeth 34 has a coil winding portion 34c on which a coil 31 is wound, and a magnet opposing portion 34d facing the field magnets 23 of the rotor 70. The width (transverse (circumferential) length) of the magnet opposing portion 34d is larger than the width of the coil winding portion 34c. Thus, the magnet opposing portion 34d has an end face 34a (end face facing the field magnets 23) larger than an end face 34b (end face facing the second stator 40) of the coil winding portion 34c. The second stator 40 side edges of the coil winding portion 34c are chamfered, so that the width of the end face 34b is smaller than that of the coil winding portion 34c.

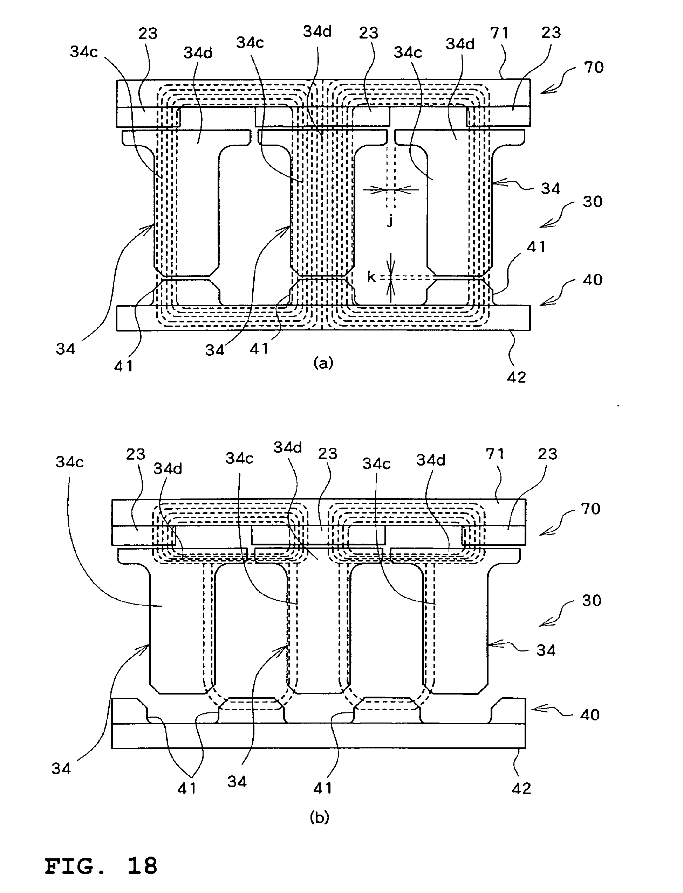

The distance j between transverse (circumferential) end faces of the magnet opposing portions 34d of adjacent first teeth 34 is greater than the distance k between the end faces 34b of the coil winding portions 34c and end faces 41 a of second teeth 41 of the second stator 40 (see FIG. 8 or FIG. 18), which is described later.

The resin part 36 has an inner peripheral portion 36a and an outer peripheral portion 36b. The inner peripheral portion 36a is located inside the first teeth 34 and the coils 31 (on the side of the axis of the crankshaft 51) and has an annular shape surrounding the crankshaft 51. The outer peripheral portion 36b is located outside the first teeth 34 and the coils 31 and has an annular shape surrounding the axis of the crankshaft 51 (see FIG. 4 or FIG. 6).

The outer peripheral portion 36b extends outward in the vehicle width direction (direction from the proximal side to the end 51c of the crankshaft 51 in the rotating shaft direction). A plurality of engaging portions 37 (37a, 37b, 37c, 37d) extend radially outward from the edge of the outer peripheral portion 36b on the side of the end 51 c (see FIG. 6). Each of the engaging portions 37 has a recess opening outward in the vehicle width direction. The case cover 19 has recesses 19c at positions corresponding to the engaging portions 37. One ends of pins 38 are fitted in the engaging portions 37, and the other ends of the pins 38 are removably fitted in the recesses 19c. Therefore, the first stator 30 is restricted from rotating about the rotating shaft but movable in the rotating shaft direction.

The part of the outer peripheral portion 36b between the engaging portion 37a and the engaging portion 37b adjacent to each other is cut out. Therefore, the first stator 30 has a cutout 39 opening radially outward. A gear engaging portion 45 formed on the second stator 40 protrudes radially outward through the cutout 39. The gear engaging portion 45 is in meshing engagement with a gear (operation mechanism) 68 for rotating the second stator 40 (see FIG. 5). The gear engaging portion 45 of the second stator 40 and the rotation of the second stator 40 are described later in detail.

An annular supported surface 36c is formed on the inner periphery of the inner peripheral portion 36a. The supported surface 36c is perpendicular to the rotating shaft direction. An annular supporting surface 71d perpendicular to the rotating shaft direction is formed on the outer periphery of the inner cylindrical portion 71c of the yoke 71. An annular bearing 63 is interposed between the supporting surface 71d and the supported surface 36c. The annular bearing 63 restricts the first stator 30 from moving toward the yoke 71. That is, as described before, the first stator 30 is attached to the case cover 19 for movement in the rotating shaft direction. The first teeth 34 are attracted toward the field magnets 23 by the magnetic force of the field magnets 23. The bearing 63 is supported on the supporting surface 71d and supports the first stator 30 on its outside in the vehicle width direction against the magnetic force to restrict the first stator 30 from moving toward the yoke 71.

A contacted portion 36k is formed on the inner peripheral portion 36a of the resin part 36. The contacted portion 36k is of a cylindrical shape surrounding the crankshaft 51 and extends outward in the vehicle width direction beyond the second stator 40 side end faces 34b of the first teeth 34. The inner peripheral surface of the contacted portion 36k is in contact with the outer peripheral surface of the rotation supporting portion 19a of the case cover 19, whereby the radial position of the first stator 30 is fixed and the first stator 30 is prevented from vibrating when the rotary electric machine 20 is driven.

The contacted portion 36k has an end face (contacting face) 36h perpendicular to the rotating shaft direction on the outside in the vehicle width direction. The second stator 40 is in contact with the end face 36h. The contact of the second stator 40 with the end face 36h is described later in detail.

### Second stator

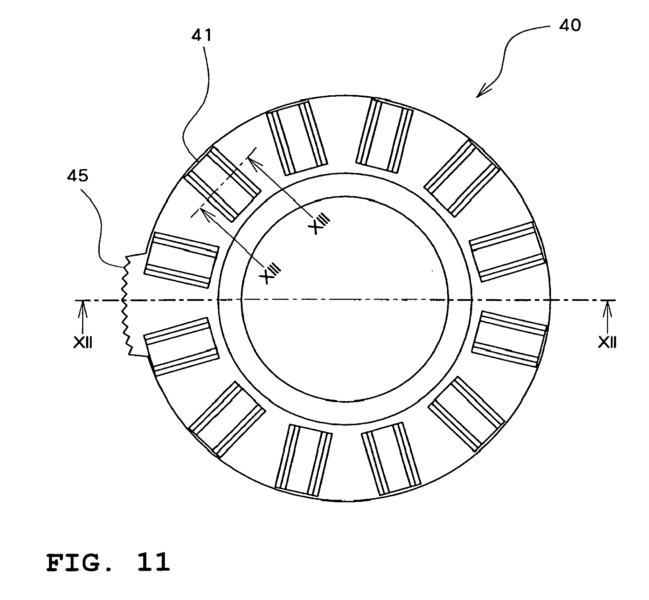

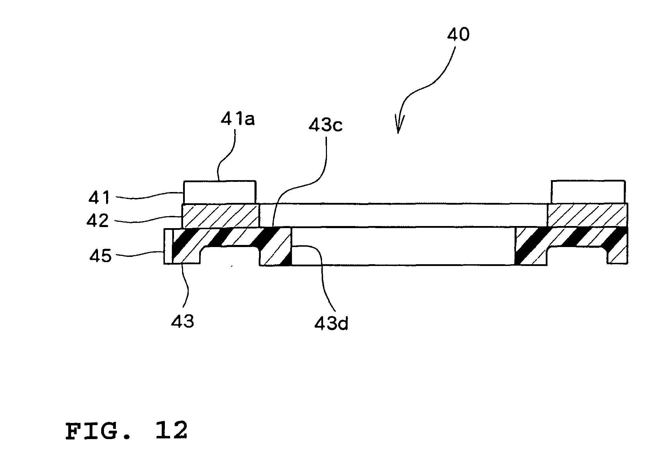

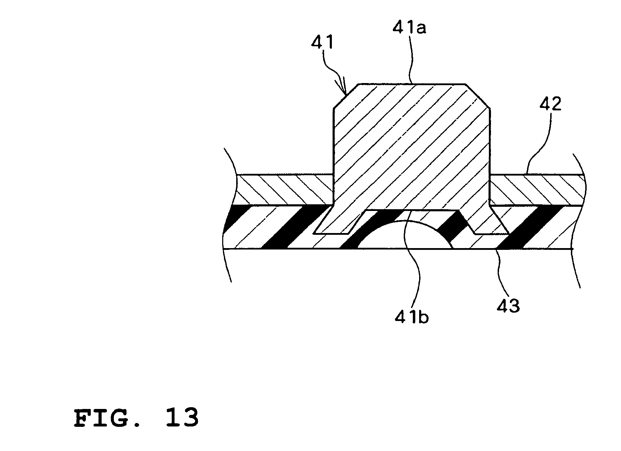

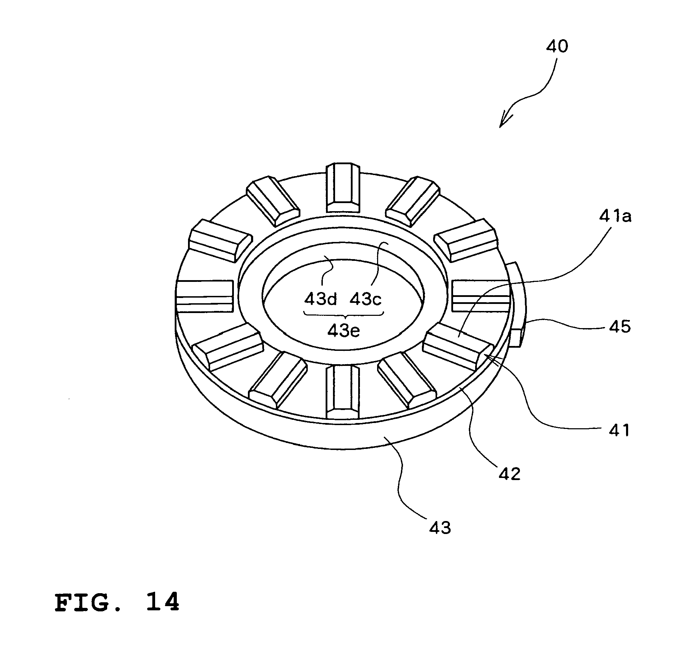

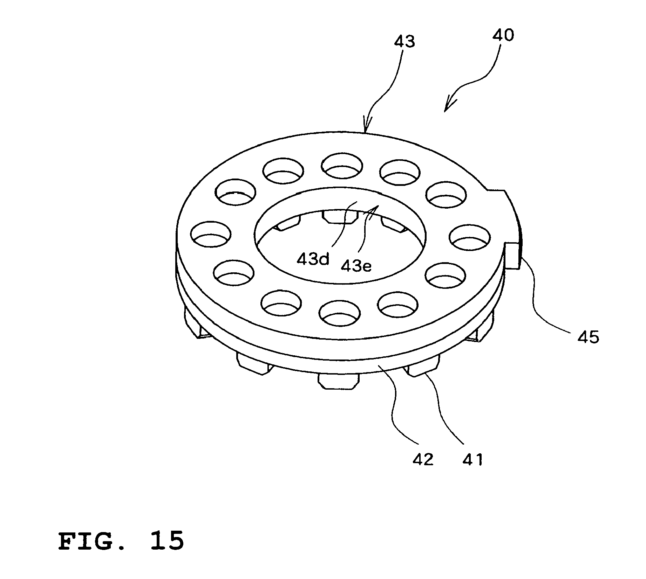

The second stator 40 is described in detail with reference to FIG. 3 to FIG. 5 and FIG. 11 to FIG. 15. FIG. 11 is a front view of the second stator 40, FIG. 12 is a cross-sectional view taken along the line XII-XII of FIG. 11, FIG. 13 is a cross-sectional view taken along the line XIII-XIII of FIG. 11. FIG. 14 and FIG. 15 are perspective views of the second stator 40. FIG. 14 is a perspective view illustrating the side of the second stator 40 facing the first stator 30, and FIG. 15 is a perspective view illustrating the side of the second stator 40 opposite the side facing the first stator 30.

The second stator 40 has a plurality of second teeth 41 constituting a magnetic circuit in conjunction with the first teeth 34 and a disk-shaped base 42. The second teeth 41 are arranged in a circle around the axis of the crankshaft 51 and face the first teeth 34. An annular space is formed between the outer peripheral portion 36a and the inner peripheral portion 36b of the first stator 30, and the second teeth 41 are located in the space. The base 42 has a plurality of fitting holes arranged in a circle, and the second teeth 41 are press-fitted in the fitting holes and held in annular configuration. A resin part 43 made of a resin containing a lubricant is attached to the other side of the base 42.

As shown in FIG. 13 or FIG. 14, each of the second teeth 41 is made of iron and has a rectangular shape as viewed in a plan view. Each of the second teeth 41 is chamfered at corners and has a hexagonal shape as viewed in a transverse cross-section. The width (transverse (circumferential) length) of end faces 41a of the second teeth 41 on the side of the first teeth 34 is smaller than the width (transverse (circumferential) length) of end faces 41b on the other side.

The resin part 43 has a generally annular shape, and has an annular contacting portion 43e extending radially inward. The contacting portion 43e has an inner periphery (rotation supported surface) 43d with a diameter equal to that of the outer periphery (rotation supporting surface) of the rotation supporting portion 19a of the case cover 19, and the inner peripheral surface of the inner periphery 43d is in contact with the outer peripheral surface of the rotation supporting portion 19a. The second stator 40 is thereby supported by the case cover 19 for rotation about the rotating shaft.

The contacting portion 43e is in contact with the first stator 30, whereby the distance between the end faces 34b of the first teeth 34 and the end faces 41a of the second teeth 41 is set to a predetermined value.

That is, the second teeth 41 are attracted toward the first stator 30 by the magnetic force of the first stator 30. The annular contacting portion 43e has an end face 43c (contacting face), on the side of the first stator 30, with a diameter generally equal to that of the end face 36h (contacted face) of the contacted portion 36k of the first stator 30. The end face 36h is in contact with the end face 43c and supports the second stator 40 on the outside in the vehicle width direction against the magnetic force to restrict the second stator 40 from moving toward the first stator 30 and to ensure the distance k.

### Stator rotating mechanism

The second stator 40 is driven by the stator rotating mechanism 6 and rotates relative to the first stator 30. That is, the second stator 40 has the gear engaging portion 45 protruding radially outward from the outer periphery of the resin part 43 and having a prescribed circumferential length. As described before, the gear engaging portion 45 protrudes radially outward through the cutout 39 of the first stator 30, and can reciprocate circumferentially within the cutout 39. The stator rotating mechanism 6 has a motor (actuator) 66, a gear (operation mechanism) 68 linked with the second stator 40, and two wires (transmitting member) 67 and 67 connecting the motor 66 and the gear 68. The wires 67 are located outside the rotary electric machine 20 (outside the case cover 19). One ends of the wires 67 are connected to the motor 66, and the other ends of the wires 67 are connected the gear 68. The gear 68 is in meshing engagement with the gear engaging portion 45, and the forward or reverse rotation of the motor 66 is transmitted to the second stator 40 via the wires 67 and the gear 68a.

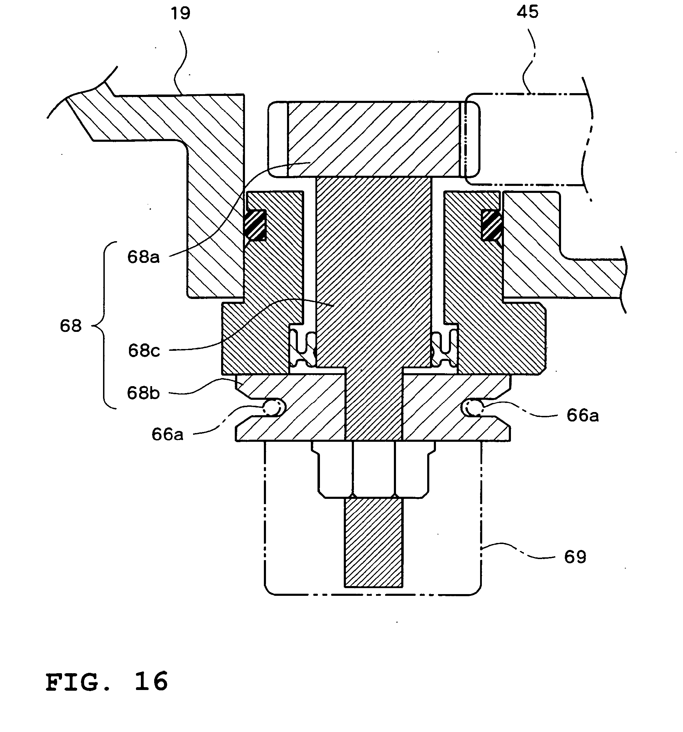

Here, the stator rotating mechanism 6 is described in detail with reference to FIG. 2 and FIG. 16. FIG. 16 is a cross-sectional view taken along the line XVI-XVI of FIG. 2, illustrating a cross-section of the gear 68. As described before, the rotary electric machine 20 is mounted on the crankshaft 51, and covered with the case cover 19 from outside in the vehicle width direction. The motorcycle 1 is a unit-swing type vehicle, and the rear arm 16 which can move up and down together with the crankcase 50d during running is attached to the crankcase 50d. The motor 66 is located behind the case cover 19, and secured to the rear arm 16 by a bracket (not shown) attached to the rear arm 16. The rear arm 16 is located on the side of the center of the vehicle from a side of the case cover 19. Thus, even when the motor 66 is attached, the vehicle width does not increase.

As shown in FIG. 16, the gear 68 has a gear portion 68a, a pulley 68b, and a shaft portion 68c. The pulley 68b is located outside the case cover 19. The one ends of the two wires 67 and 67 are connected to the pulley 68b, and the wires 67 and 67 are pulled to rotate the pulley 68b in a forward or reverse direction depending on the rotating direction of the motor 66. The gear portion 68a is located inside the case cover 19 and engaged with the gear engaging portion 45. The pulley 68b and the gear portion 68a are connected by the shaft portion 68c, and the second stator 40, the gear portion 68a and the pulley 68b are operatively linked. The shaft portion 68c extends in the direction of the axis of rotation of the crankshaft 51, and is rotatably supported by a cylindrical support member secured to the case cover 19.

The other ends of the two wires 67 and 67 are attached to an output shaft 66a of the motor 66. The motor 66 pulls one of the wires 67 to rotate the second stator 40 in a forward direction and the other to rotate the second stator 40 in a reverse direction. A rotational angle sensor 69 (such as a potentiometer) for detecting the amount of rotation of the pulley 68b and outputting it as information indicating the amount of rotation of the second stator 40 is attached to the pulley 68b. The rotation of the second stator 40 is controlled based on the information from the rotational angle detection sensor 69.

### Changes in magnetic flux by rotation of second stator

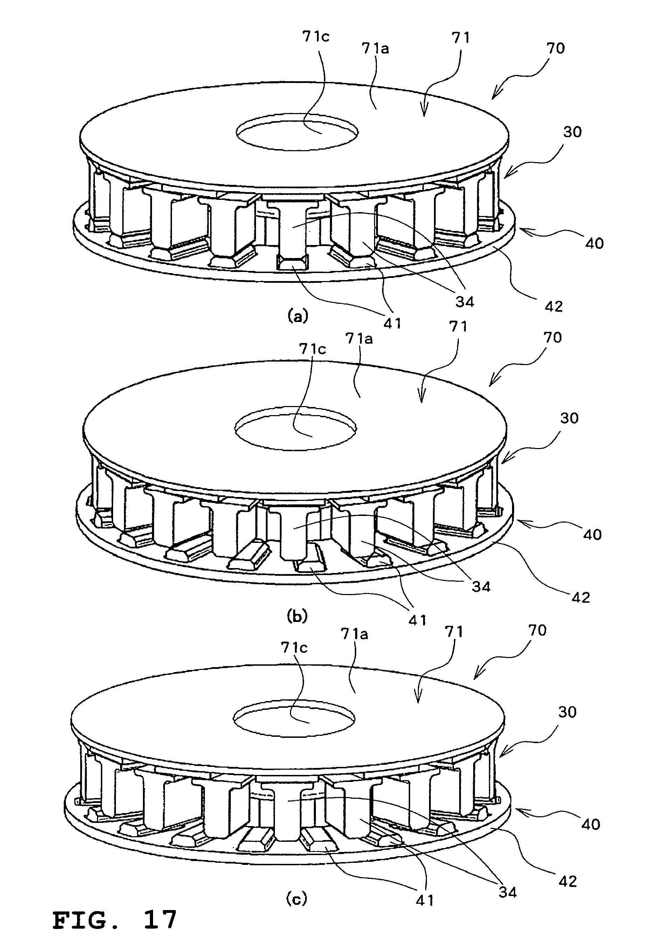

The rotation of the second stator 40 and the changes in magnetic field caused by the rotation of the second stator 40 are described. FIG. 17 is a view illustrating the manner in which the second stator 40 rotates about the axis of the crankshaft 51, and FIG. 18 is a view illustrating the changes in the amount of magnetic flux. For the sake of explanation, the resin part 36 of the first stator 30, the resin part 43 of the second stator 40 and so on shown in FIG. 3 or FIG. 4 are omitted in these drawings, and the outer cylindrical portion 71b of the yoke 71 is omitted in FIG. 17.

FIG. 17(a) shows a state in which the second teeth 41 are diametrically opposed to the first teeth 34. In this state, the distance between the end faces 34b of the first teeth on the side of the second teeth 41 and the end faces 41 a of the second teeth 41 on the side of the first teeth 34 has a minimum value k. As described before, the first teeth 34 are so arranged that the distance j between the transverse end faces 34e of the magnet opposing portions 34d of adjacent first teeth 34 is greater than the distance k. Therefore, the magnetic resistance caused by the distance j is greater than the magnetic resistance caused by the distance k. In this case, as shown in FIG. 18(a), the coil winding portions 34c are included in the magnetic circuit, and most of the magnetic flux formed between adjacent field magnets 23 passes through the coil winding portions 34c. Since the magnetic flux flows inside the coils 31, a strong magnetic field is generated.

When the motor 66 is rotated in a forward direction, the second teeth 40 are moved through the intermediate positions shown in FIG. 17(b) to positions in the middle between adjacent first teeth 34 as shown in FIG. 17(c). Then, the distance between the first teeth 34 and the second teeth 41 increases and the magnetic resistance between the first teeth 34 and the second teeth 41 increases. Thus, as shown in FIG. 18(b), most of the magnetic flux generated between adjacent field magnets 23 flows from the magnet opposing portions 34d of the first teeth 34 to the magnet opposing portions 34d of adjacent first teeth 34 and a weak magnetic field is generated. Therefore, when the rotary electric machine 20 is driven, the magnetic flux from the field magnets 23 does not flow across the coils 31 of the first teeth 34 and the magnetic resistance in the rotating direction of the rotor 70 caused by the magnetic flux across the coils 31 is reduced. As a result, low-torque high-speed rotation can be achieved.

When the teeth are diametrically opposed to each other as shown in FIG. 17(a), one end face of the gear engaging portion 45 described before is in contact with one end face 39a of the cutout 39. When the second teeth 41 are in the middle between adjacent first teeth 34 as shown in FIG. 17(c), the other end face of the gear engaging portion 45 is in contact with the other end face 39b of the cutout 39. That is, the end faces 39a and 39b of the cutout 39 regulate the range through which the second stator 40 can rotate.

In the motorcycle 1 described above, the rotary electric machine 20 has a first stator 30 and a second stator 40, and the second stator 40 rotates relative to the first stator 30. The magnetic resistance is thereby varied and the output characteristics of the rotary electric machine 20 are changed. Therefore, the rotary electric machine 20 can be driven under various running conditions.

Also, the motor 66 for rotating the second stator 40 is attached to the rear arm 16 behind the crankcase, and the gear 68 is attached to the case cover 19. Therefore, since the stator rotating mechanism 6 for rotating the second stator can be installed without changing the layout in the crankcase 50d, the influence on the layout of the existing vehicle body is small.

In addition, the first stator 30 rotatably supports the second stator 40 against the attractive force between the stators. Therefore, the distance between the end faces 34b of the first teeth 34 and the end faces 41 a of the second teeth 41 can be set accurately and the output characteristics can be controlled precisely, regardless of the shape of the case cover 19 and so on.

### Other embodiments

### Another example of crankcase cover and gear

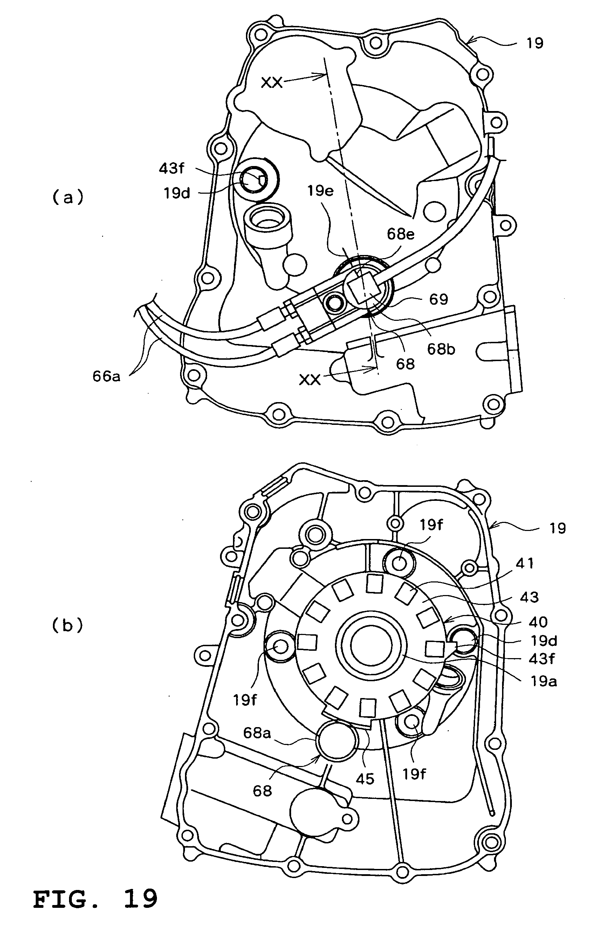

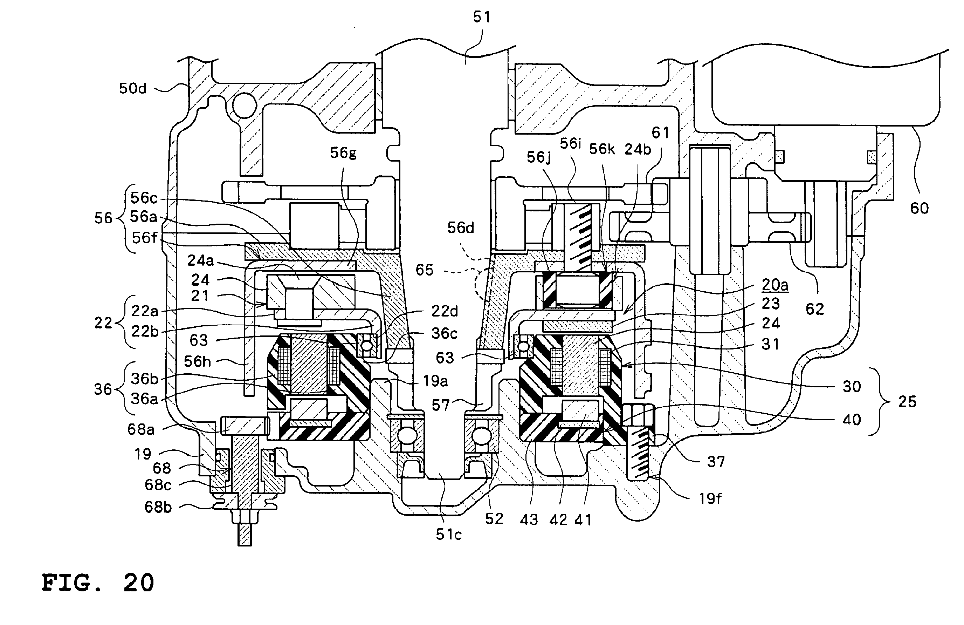

The present teaching is not limited to the motorcycle 1 described above and various modification can be made to the present teaching. For example, the case cover 19 may have a window through which the rotational angle of the second stator 40 can be visually checked from outside of the case cover 19. FIG. 19(a) is a side view of the case cover 19 of a motorcycle according to this embodiment, FIG. 19(b) an inside view of the case cover 19, and FIG. 20 is a cross-sectional view taken along the line XX-XX of FIG. 19(a). In FIG. 19(b), the second stator 40 is rotatably supported by the case cover 19.

In the motorcycle shown in FIG. 19(b), the resin part 43 of the second stator 40 has a protrusion 43f protruding radially. The case cover 19 has a window 19d at a position corresponding to the protrusion 43f of the second stator 40 in a reference rotational angular position (in a rotational angular position where the second teeth 41 are diametrically opposed to the first teeth 34). The window 19d, which is located in a position corresponding to the protrusion 43f of the second stator 40 in a reference rotational angular position, may be formed over the range of movement of the protrusion 43f, for example, so that the protrusion 43f can be always visually checked when the second stator 40 is rotated.

The pulley 68b may have a mark 68e indicating that the second stator 40 is in the reference rotational angular position and the case cover 19 may have a mark 19e corresponding to the mark 68e as shown in FIG. 19(a). Then, in setting initial rotational angle of the motor 66 (angle at which the motor 66 is rotated neither in forward nor reverse), the positional relation between the mark 68e and the mark 19e is used for reference.

### Another example of rotary electric machine

Also in a rotary electric machine 20a shown in FIG. 20, the case cover 19 has a rotation supporting portion 19a for rotatably supporting the second stator 40 as in the rotary electric machine 20 described above.

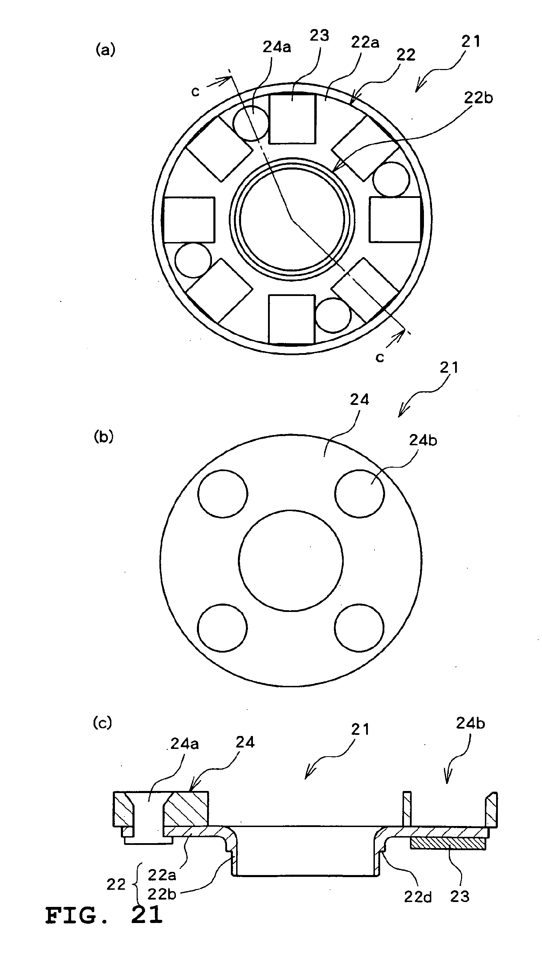

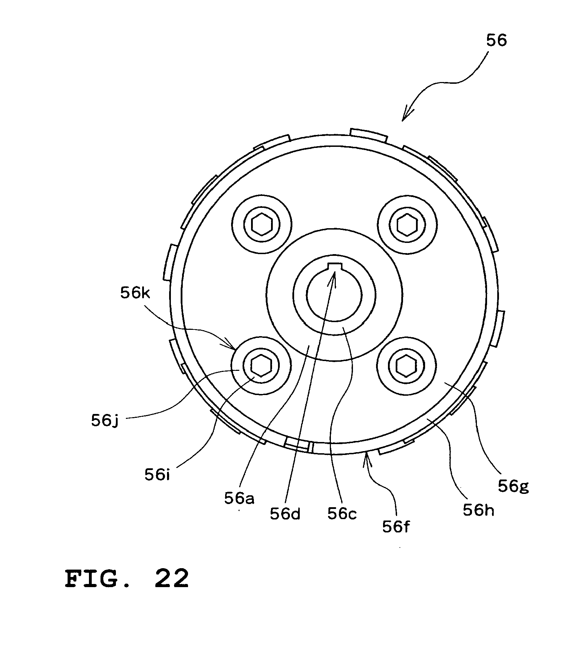

The rotary electric machine 20a has a rotor 21 which is slidable in the rotating shaft direction and rotatably supported by the first stator 30. The rotor 21 is engaged with and rotatable together with a flywheel 56. The rotary electric machine 20a is described in detail below with reference to FIG. 21 and FIG. 22. FIG. 21(a) is a front view of the rotor 21 of the rotary electric machine 20a (view seen from the side of a fixed stator 30), FIG. 21(b) is a rear view of the rotor 21, FIG. 21(c) is a cross-sectional view taken along the line c-c of FIG. 21 (a), and FIG. 22 is a front view of the flywheel 56 arranged opposite to the rotary electric machine 20a (view seen from the side of the rotor 21).

In the rotary electric machine 20a, the first stator 30 has engaging portions 37 fixed by bolts threaded into three bolt holes 19f of the case cover 19 to secure the first stator 30 to the case cover 19 as shown in FIG. 19(b) or FIG. 20.

The first stator 30 has an inner peripheral portion 36a having an annular contacted surface 36c perpendicular to the rotating shaft direction. The rotor 21 has a generally disk-shaped yoke 22. The yoke 22 has a disk portion 22a with a through hole through which the crankshaft 51 extends, and an inner cylindrical portion 22b extending from the edge of the through hole toward the first stator 30 (outward in the vehicle width direction). An annular contacted surface 22d perpendicular to the rotating shaft direction is formed on the outer periphery of the inner cylindrical portion 22b. The yoke 22 is attracted toward the first stator 30 by the magnetic force thereof. The contacted surface 36c restricts the yoke 22 from moving toward the first stator 30 against the magnetic force via a bearing 63 and rotatably supports the yoke 22.

As shown in FIG. 20 or FIG. 21(c), the rotor 21 has an annular portion 24 with an annular shape and with a thickness in the rotating shaft direction. The annular portion 24 is secured to the reverse side of the disk portion 22a of the yoke 22 (the side opposite the side facing the first stator 30) by a plurality of (four, in this embodiment) rivets 24a. The annular portion 24 has a plurality of generally circular recesses 24b at regular circumferential intervals.

The flywheel 56 is attached to the crankshaft 51 and faces the rotary electric machine 20a. The flywheel 56 has a disk portion 56a, an inner cylindrical portion 56c, and a centrifugal mass portion 56f. The disk portion 56a has a through hole at its center and the crankshaft 51 extends through the through hole. The inner cylindrical portion 56c extends outward in the vehicle width direction (toward the first stator) from the edge of the through hole. The centrifugal mass portion 56f has a disk-shaped fixing disk portion 56g and a cylindrical portion 56h extending from the outer periphery of the fixing disk portion 56g toward the rotary electric machine 20a. The fixing disk portion 56g has a plurality of (four, in this embodiment) holes for bolt fixing at positions corresponding to the recesses 24b. Bolts 56i are inserted in the holes and the fixing disk portion 56g and the disk portion 56a are secured to the one-way clutch 55 by the bolts 56i.

The heads of the bolts 56i protrude in the rotating shaft direction toward the rotary electric machine 20a, and annular damper members 56j made of an elastic material such as rubber are fitted over the heads of the bolts 56i. The heads and the damper members 56j form protrusions 56k with a size corresponding to the size of the recesses 24b. When the rotor 21 moves closer to the flywheel 56 and the protrusions 56k are fitted into the recesses 24b, the rotor 21 and the flywheel 56 are operatively linked with each other. The above is the structure of the rotary electric machine 20a.

A groove-like recess 56d extending linearly in the rotating shaft direction is formed in the inner peripheral surface of the inner cylindrical portion 56c. A recess is formed in the side surface of the crankshaft 51 at a position corresponding to the inner peripheral surface of the flywheel 56. An engaging member 65 is engaged with the recess and the recess 56d of the flywheel 56, whereby the positions of the flywheel 56 and the crankshaft 51 relative to each other are determined. The structure of the first stator 30 for supporting the second stator 40 is the same as that in the rotary electric machine 20, and hence its description is omitted here.

### Support of motor by crankcase cover

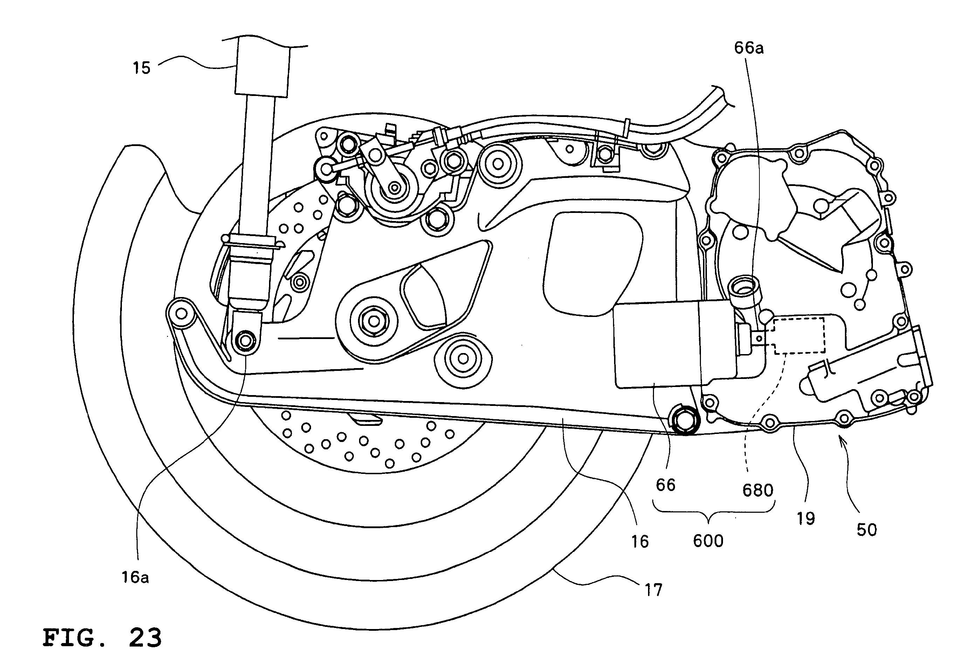

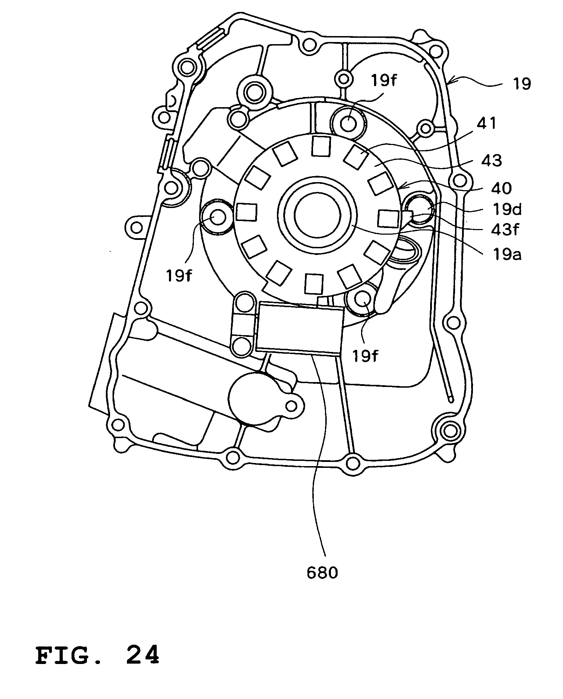

In the motorcycle described above, the motor 66 is attached to the rear arm 16. However, the motor 66 may be supported by the case cover 19. FIG. 23 is a side view of a rear part of a motorcycle according to this embodiment, and FIG. 24 is an inside view of a case cover 19.

In a stator rotating mechanism 600 of the motorcycle shown in FIG. 23 and FIG. 24, a front part of the motor 66 is supported by a rear part of the case cover 19, and the motor 66 has an output shaft 66a extending in the traveling direction of the vehicle. The case cover 19 has an opening facing backward. The output shaft 66a of the motor 66 extends into the case cover 19 through the opening. A worm gear (operation mechanism) 680 is mounted on a front part of the output shaft 66a of the motor 66. The worm gear 680 is located inside the case cover 19 and in meshing engagement with the gear engaging portion 45 (see FIG. 24).

### Another example of rotary electric machine

### Another example of second stator supporting structure by first stator

In the rotary electric machines 20 and 20a described above, the first stator 30 is in direct contact with the second stator 40 and supports the second stator 40. However, the first stator may support the second stator indirectly.

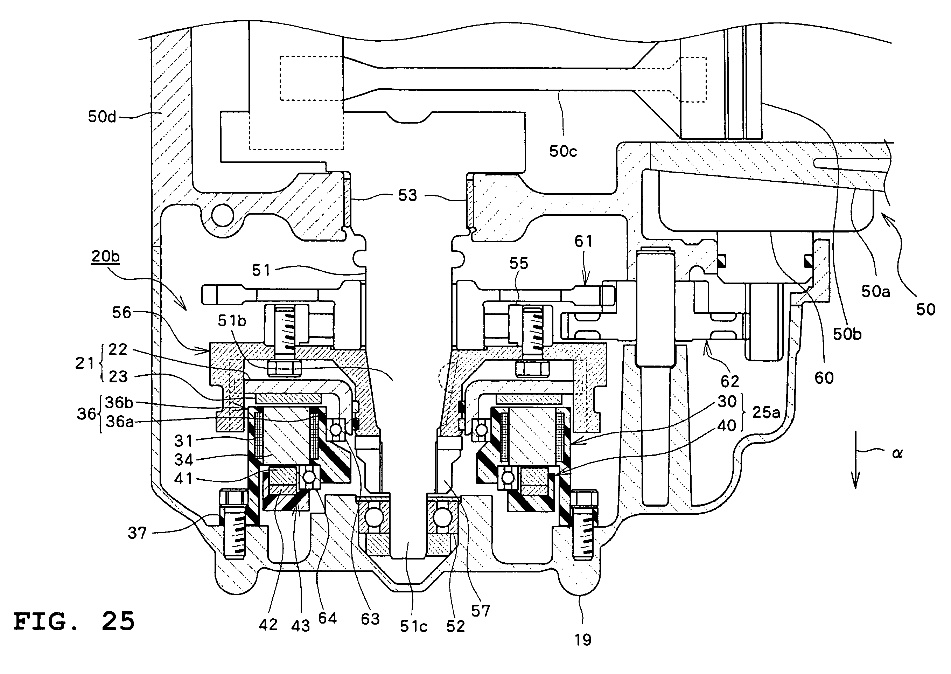

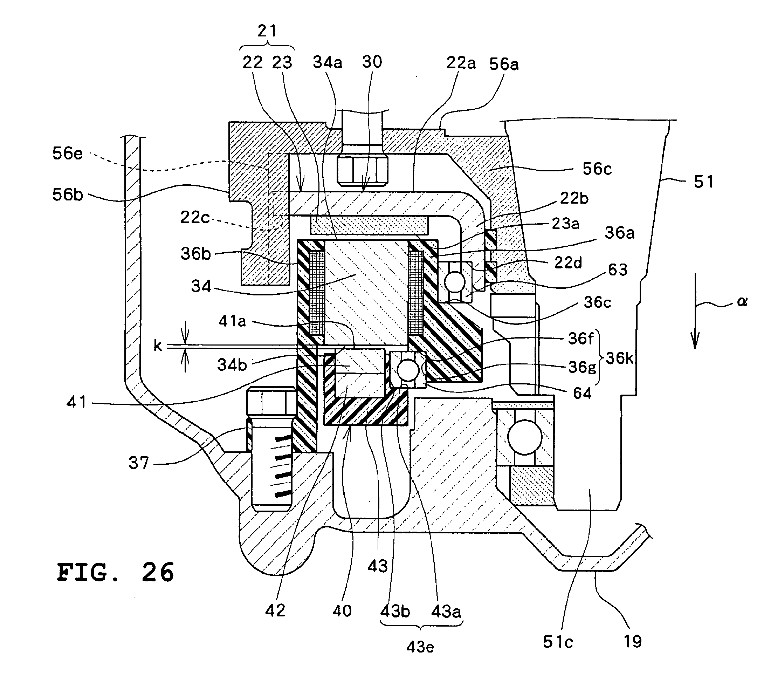

FIG. 25 and FIG. 26 are cross-sectional views of a rotary electric machine 20b according to this embodiment, and FIG. 26 is an enlarged view of FIG. 25. The same parts as those in the rotary electric machines 20 and 20a are designated in these drawings by the same reference numerals and their description is omitted.

The inner peripheral portion 36a of the first stator 30 has a contacted portion 36k on its outside in the vehicle width direction (on the side of the second stator 40). The resin part 43 of the second stator 40 has a contacting portion 43e radially inside the second teeth 41 and the base 42. A bearing 64 is interposed between the contacted portion 36k and the contacting portion 43e, and the first stator 30 rotatably supports the second stator 40 via the bearing 64 with the distance between the first stator 30 and the second stator 40 maintained constant.

More specifically, the contacted portion 36k has an annular contacted surface 36f perpendicular to the rotating shaft direction. The contacted surface 36f is located slightly outside a plane including the end faces 34b of the first teeth 34 on the side of the second teeth 41 in the vehicle width direction. The contacted portion 36k also has a cylindrical rotation supporting surface 36g extending outward in the vehicle width direction from the inner periphery of the contacted surface 36f. The contacting portion 43e of the second stator 40 has an annular bearing supported surface 43a perpendicular to the rotating shaft direction, and a cylindrical rotation supported surface 43b extending inward in the vehicle width direction from the outer periphery of the bearing supported surface 43a.

The bearing 64 is interposed between the contacted surface 36f of the contacted portion 36k and the bearing supported surface 43a of the contacting portion 43e. The contacted surface 36f restricts the second stator 40 from moving toward the first stator 30 against the magnetic force attracting the second stator 40 toward the first stator 30.

The difference between the distance from a plane including the end faces 34b of the first teeth 34 to an end face 64a of the bearing 64 on the side of the second stator 40 and the distance from a plane including the end faces 41 a of the second teeth 41 to the bearing supported surface 43a is the distance k between the second teeth 41 and the first teeth 34.

The diameter of the rotation supporting surface 36g of the contacted portion 36k is equal to the inside diameter of the bearing 64, and the entire outer peripheral surface of the rotation supporting surface 36g is in contact with the inner peripheral surface of the bearing 64. The diameter of the rotation supported surface 43b of the second stator 40 is equal to the diameter of the outer peripheral surface of the bearing 64, and the entire inner peripheral surface of the rotation supported surface 43b is in contact with the outer peripheral surface of the bearing 64. Therefore, the first stator 30 can support the second stator 40 and prevent the second stator 40 from oscillating radially.

The first stator 30 shown in FIG. 25 and FIG. 26 is secured to the case cover 19 and cannot move in the rotating shaft direction and rotate about the rotating shaft as the first stator 30 in the rotary electric machine 20a.

### Another example of rotor and flywheel

The rotor 21 is engaged with the flywheel 56 and slidable in the rotating shaft direction. More specifically, the yoke 22 of the rotor 21 has a generally disk-like shape and has a disk portion 22a and an inner cylindrical portion 22b as the yoke 22 of the rotary electric machine 20a. The disk portion 22a has a plurality of projections 22c protruding radially outward from the periphery thereof. The flywheel 56 has a generally cup shape, and has a disk portion 56a, an inner cylindrical portion 56c, and an outer cylindrical portion 56b extending outward in the vehicle width direction (toward the rotary electric machine 20b) from the periphery of the disk portion 56a. Recesses 56e extending linearly in the rotating shaft direction are formed in the inner peripheral surface of the outer cylindrical portion 56b. The number of the recesses 56e is the same as the number of the projections 22c. The projections 22c are engaged with the recesses 56e for sliding movement in the rotating shaft direction so that the yoke 22 can slide in the rotating shaft direction.

The yoke 22 is rotatably supported by the first stator 30 via the bearing 63 and restricted from moving toward the first stator 30 as the yoke 22 in the rotary electric machine 20a.

### Another example of magnetic field varying mechanism

In the rotary electric machines described above, the magnetic field varying mechanism has a first stator 30 and a second stator 40, and the second stator 40 is rotatable relative to the first stator 30. However, the magnetic field varying mechanisms are not limited to the above example. For example, the second stator 40 may be moved back and forth in the rotating shaft direction by the operation of the motor 66 to vary the magnetic resistance between the first teeth 34 and the second teeth 41 so that the intensity of magnetic field can be changed. Alternatively, the rotor 21 may be moved in the rotating shaft direction by the operation of the motor 66 to change the distance between the first teeth 34 and the field magnets 23 in the rotating shaft direction.

### Radial gap type rotary electric machine provided with magnetic field varying mechanism

The rotary electric machine mounted on a motorcycle as described above is an axial gap type rotary electric machine in which a stator is arranged in the direction of the axis of rotation of a rotor. However, the rotary electric machine is not limited to an axial gap type rotary electric machine. The rotary electric machine may be a radial gap type rotary electric machine in which a stator is arranged radially inside or outside a rotor and faces the rotor. An example of a magnetic field varying mechanism in a radial gap type rotary electric machine is described below.

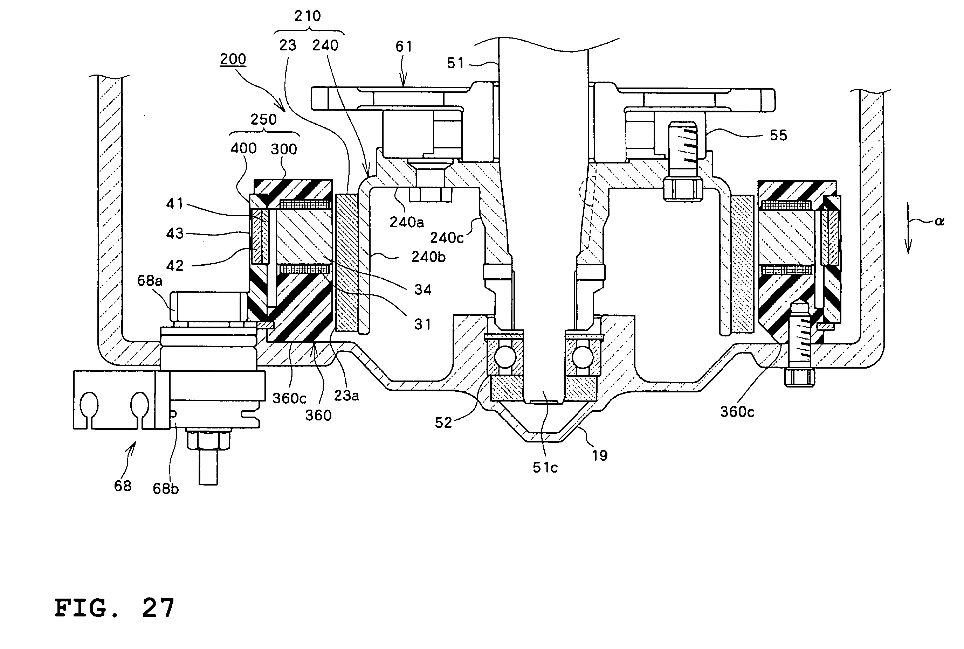

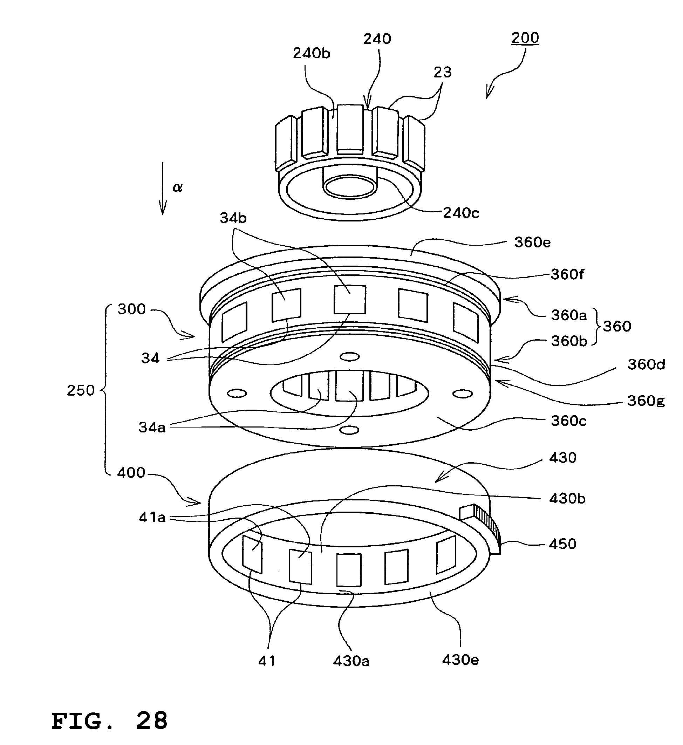

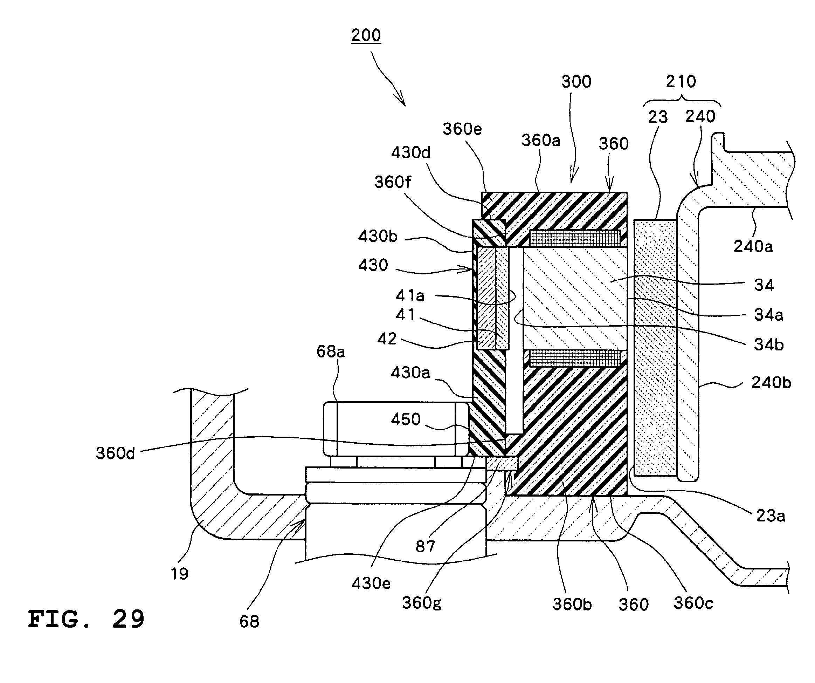

FIG. 27 is a cross-sectional view of a radial gap type rotary electric machine 200 provided with a magnetic field varying mechanism, and FIG. 28 is an exploded perspective view of the rotary electric machine. FIG. 29 is an enlarged view of FIG. 27. In FIG. 28, the crankshaft 51 is not shown. In FIG. 27, the cylinder 50a located on the proximal side of the crankshaft 51 and so on are omitted. The same parts as those in the rotary electric machines described above are designated in these drawings by the same reference numerals and their description is omitted.

The rotary electric machine 200 has a cylindrical rotor 210, and a circular cylindrical stator 250 located radially outside the rotor 210. The rotor 210 has a generally cup-shaped yoke 240 and field magnets 23. The yoke 240 has a disk portion 240a, an outer cylindrical portion 240b and an inner cylindrical portion 240c. The disk portion 240a has a through hole at its center and the crankshaft 51 extends through the through hole. The inner cylindrical portion 240c extends outward in the vehicle width direction from the edge of the through hole. The outer cylindrical portion 240b extends outward in the vehicle width direction from the outer periphery of the disk portion 240a.

As in the case with the yoke 71 of the rotary electric machine 20, the disk portion 240a is secured to the one-way clutch 55 by bolts and the yoke 240 is operatively linked with the one-way clutch 55. A plurality of field magnets 23 are joined to the outer peripheral surface of the outer cylindrical portion 240b and arranged perpendicular to the radial direction.

The circular cylindrical stator 250 is located radially outside the outer cylindrical portion 240b and surrounds the outer cylindrical portion 240. The stator 250 has a circular cylindrical second stator 400, and a circular cylindrical first stator 300 inserted in the second stator in the rotating shaft direction. These members constitute a magnetic field varying mechanism.

The stator 250 is described in detail below. The first stator 300 is first described.

The first stator 300 has a plurality of first teeth 34, and coils 31 wound around the first teeth 34. The first teeth 34 are arranged in a circle around the axis of the crankshaft 51 and radially opposed to the field magnets 23. The first teeth 34 and the coils 31 are molded by a resin part 360 made of a resin containing a lubricant. The first stator 300 has a circular cylindrical shape.

Each of the first teeth 34 of the first stator 300 has a magnet opposing portion 34d having an end face 34a facing the field magnets 23 and larger in size than an end face 34b on the opposite side as the first teeth 34 of the stator 25 described before. The end faces 34a and 34b are curved in accordance with the inner and outer peripheral surfaces of the circular cylindrical first stator 300.

The resin part 360 has a disk-shaped inner disk portion 360a inside the first teeth 34 and the coils 31 in the vehicle width direction and a circular cylindrical outer circular cylindrical portion 360b outside the first teeth 34 and the coils 31 in the vehicle width direction. The outer circular cylindrical portion 360b has an end face 360c on the outside in the vehicle width direction which is in contact with the inner wall of the case cover 19. The end face 360c has a plurality of bolt holes at positions on the same radius. The case cover 19 has through holes at positions corresponding to the bolt holes of the outer circular cylindrical portion 360b. Bolts are inserted in the holes, and the first stator 300 is secured to the case cover 19 by the bolts and cannot move in the rotating shaft direction and rotate about the rotating shaft.

An outer peripheral surface (which is hereinafter referred as "outer rotation supporting surface") 360d with a diameter greater than that of an outer peripheral surface including the end faces 34b of the first teeth 34 is formed on an outer periphery of the outer circular cylindrical portion 360b on the outside in the vehicle width direction. A groove-like recess 360g is circumferentially formed in the outer rotation supporting surface 360d. A C-shaped circlip 87 is fitted in the recess 360g to restrict the second stator 400 from moving in the rotating shaft direction. Detailed description about the restriction of the movement of the second stator 400 in the rotating shaft direction is made later.

An annular stopper portion 360e extends radially outward from an end of the inner disk portion 360a outside in the vehicle width direction. An outer peripheral surface (which is hereinafter referred to as "inner rotation supporting surface") 360f with a diameter greater than that of the outer peripheral surface including the end faces 34b of the first teeth 34 is formed outside the stopper portion 360e in the vehicle width direction (the side where the first teeth 34 are buried). The diameter of the inner rotation supporting surface 360f is equal to the diameter of the outer rotation supporting surface 360d formed on the outer circular cylindrical portion 360b.

The second stator 400 is next described. The second stator 400 has a plurality of second teeth 41 radially opposed to the first teeth 34, and a circular cylindrical base 42 for supporting the second teeth 41 in a circular cylindrical configuration. The second teeth 41 are arranged in a circle around the crankshaft 51. The second teeth 41 and the base 42 are molded by a resin part 430 made of a resin containing a lubricant.

The second stator 400 is in contact with the first stator 300 and supported for rotation about the axis of the crankshaft 51. More specifically, the resin part 430 has an annular outer supported portion 430a and an annular inner supported portion 430b. The outer supported portion 430a is located outside the second teeth 41 in the vehicle width direction, and the inner supported portion 430b is located inside the second teeth 41 in the vehicle width direction. The inside diameter of the outer supported portion 430a is equal to the inside diameter of the inner supported portion 430b. The entire inner peripheral surface of an end of the outer supported portion 430a is in contact with the outer rotation supporting surface 360d, and the entire inner peripheral surface of an end of the inner supported portion 430b is in contact with the inner rotation supporting surface 360f. The second stator 400 is thereby supported for rotation about the axis of the crankshaft 51.

The difference between the diameter of the outer rotation supporting surface 360d and the inner rotation supporting surface 360f of the first stator 300 and the diameter of the outer peripheral surface including the end faces 34b of the first teeth 34 is the distance between the end faces 34b of the first teeth 34 and the end faces 41 a of the second teeth.

The second stator 400 is in contact with the first stator 300 and restricted from moving in the rotating shaft direction. More specifically, the inner supported portion 430b of the second stator 400 has an end face 430d inside in the vehicle width direction, and the end face 430d is in contact with the stopper portion 360e of the first stator 300, whereby the second stator 400 is restricted from moving inward in the vehicle width direction. The outer rotation supporting surface 360d of the first stator 300 has a groove-like recess 360g for receiving the circlip 87. The recess 360g is located at an end face 430e of the second stator 400 outside in the vehicle width direction. The periphery of the circlip 87 protruding radially outward from the outer peripheral surface of the outer rotation supporting surface 360d is in contact with an end of the second stator 400 to restrict the second stator 400 from moving outward in the vehicle width direction.

A gear engaging portion 450 protrudes radially outward from an end of the outer supported portion 430a of the resin part 430. As in the case with the stator 25 of the axial gap type rotary electric machine described before, the gear portion 68a of the gear 68 is in meshing engagement with the gear engaging portion 450, and the second stator 400 is rotated in forward or reverse when the motor 66 rotates in forward or reverse.

In the rotary electric machine 200 described above, the stator 250 has a second stator 400 and a first stator 300, and the output characteristics of the rotary electric machine 200 can be changed by rotating the second stator 400. The first stator 300 has cylindrical rotation supporting surfaces 360d and 360f in contact with the second stator 400. Therefore, the first stator 300 can prevent the second teeth 41 from oscillating radially and rotatably supports the second teeth 41 to ensure precise control of the output characteristics.

### Another example of radial gap type rotary electric machine

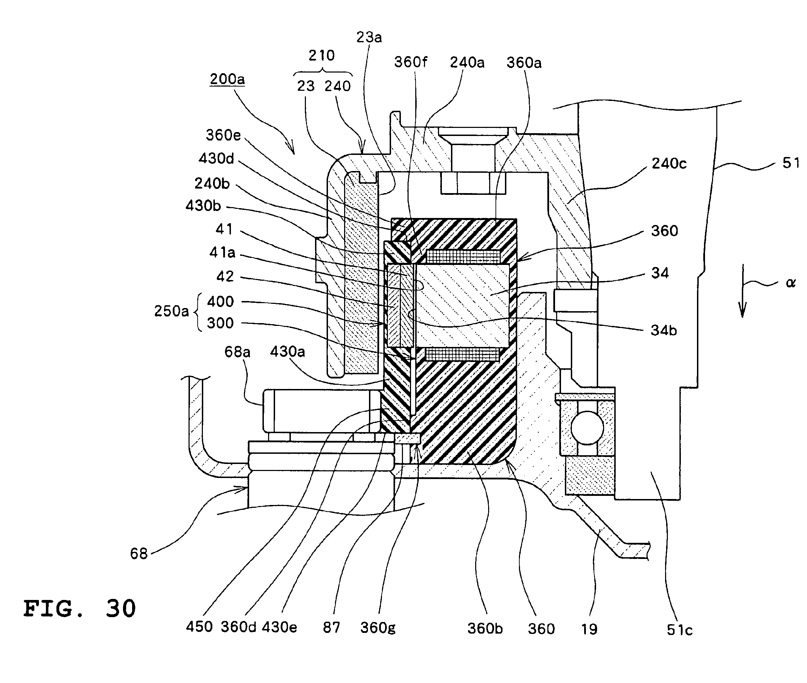

Although the circular cylindrical stator 250 is located radially outside the outer cylindrical portion 240b of the yoke 240 in the rotary electric machine 200 provided with a magnetic field varying mechanism described above, the positional relation between the stator and the rotor is not limited to the above example. For example, the stator may be located radially inside the outer cylindrical portion of the yoke as in a rotary electric machine 200a shown in FIG. 30. In FIG. 30, only one side of the axis is shown.

In the rotary electric machine 200a, a stator 250a is located radially inside the outer cylindrical portion 240b of the yoke 240. The second stator 400 is radially opposed to the field magnets 23. The first stator 300 having an outer peripheral surface with a diameter smaller than the inside diameter of the second stator 400 is located inside the second stator 400. As shown in the drawing, the inner peripheral surface of the first stator 300 is in contact with the outer peripheral surface of the circular cylindrical rotation supporting portion 19a of the case cover 19 extending in the rotating shaft direction. Therefore, the supporting strength for the first stator 300 is increased.

### Another example of radial gap type rotary electric machine

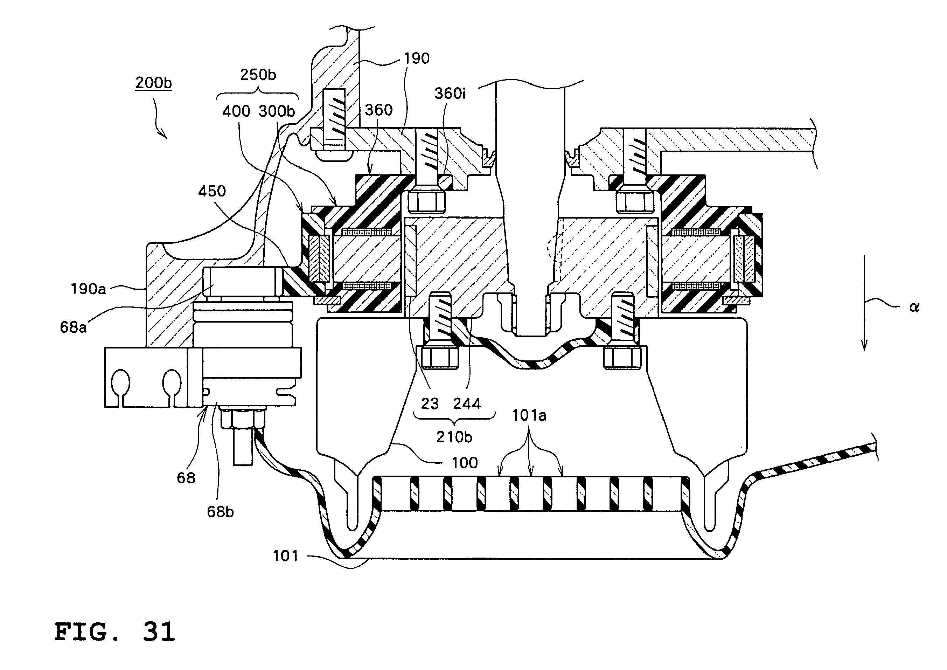

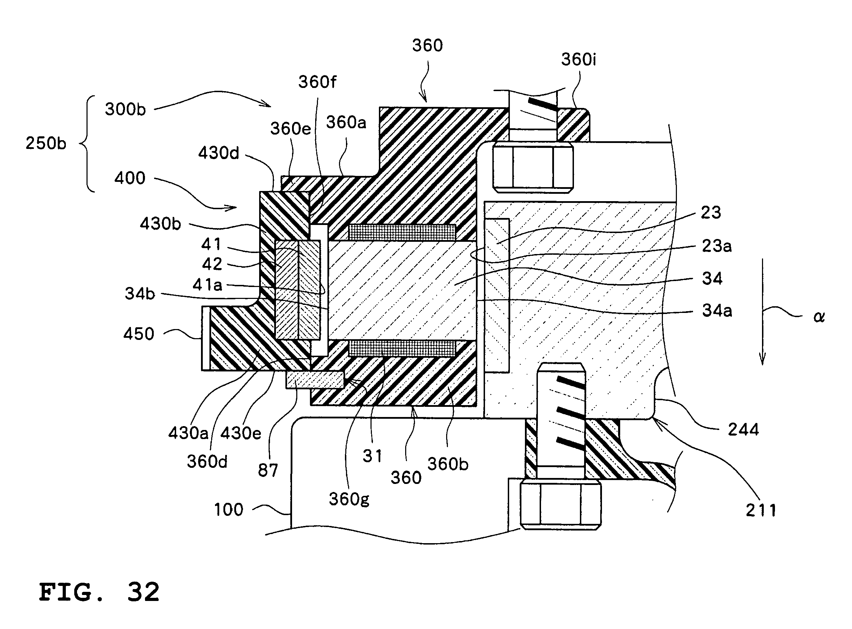

In the rotary electric machine 200a described above, the first stator 300 is secured to the case cover 19. However, the first stator 300 may be secured to a member other than the case cover 19. For example, as in a rotary electric machine 200b shown in FIG. 31 or FIG. 32, the first stator 300 may be secured to a crankcase 190 located inside the first stator 300 in the vehicle width direction. FIG. 31 is a cross-sectional view of the rotary electric machine 200b, and FIG. 32 is an enlarged view of FIG. 31. The rotary electric machine 200b is described in detail below.

The first stator 300b has a resin part 360 having a plurality of engaging portions 360i extending radially inward inside the first teeth 34 and the coils 31 in the vehicle width direction. Each of the engaging portions 360i has a through hole for bolt fixing. The crankcase 190 is located inside the rotary electric machine 200b in the vehicle width direction, and the crankcase 190 has bolt holes at positions corresponding to the engaging portions 360i. Bolts are inserted in the bolt holes and the through holes corresponding to each other and the first stator 300 is secured to the crankcase 190.

The rotary electric machine 200b has a yoke 244 having a through hole at its center, and the crankshaft 51 extends through the through hole. The field magnets 23 are buried in the outer peripheral surface of the yoke 244. The yoke 244 functions also as a flywheel. Air cooling fins 100 are attached to the outside of the yoke 244 in the vehicle width direction. A case (crankcase cover) 101 made of a resin is located outside the air cooling fins 100 in the vehicle width direction. The case 101 has a plurality of air circulation holes 101 a. The air circulation holes 101 a are located outside the air cooling fins 100 in the vehicle width direction. Therefore, the air cooling fins 100 rotate together with a rotor 210b and introduce air outside the rotary electric machine 200b into the rotary electric machine 200b to cool the rotary electric machine 200b.

The crankcase 190 has a wall portion 190a extending outward in the vehicle width direction and covering a rear part of the rotary electric machine 200b. The case 101 is attached to the wall portion 190a. The gear 68 is supported by the case 101 and the wall portion 190a. The crankshaft 51 is rotatably supported by a bearing (not shown) inside the crankcase 190 located inside the rotary electric machine 200b in the vehicle width direction.

### Another example of radial gap type rotary electric machine

In the rotary electric machine 200b described above, the first stator 300 and the second stator 400 are in direct contact with each other. The first stator 300, however, may rotatably support the second stator 400 via a bearing interposed between the inner peripheral surface of the second stator 400 and the outer peripheral surface of the first stator 300, for example.

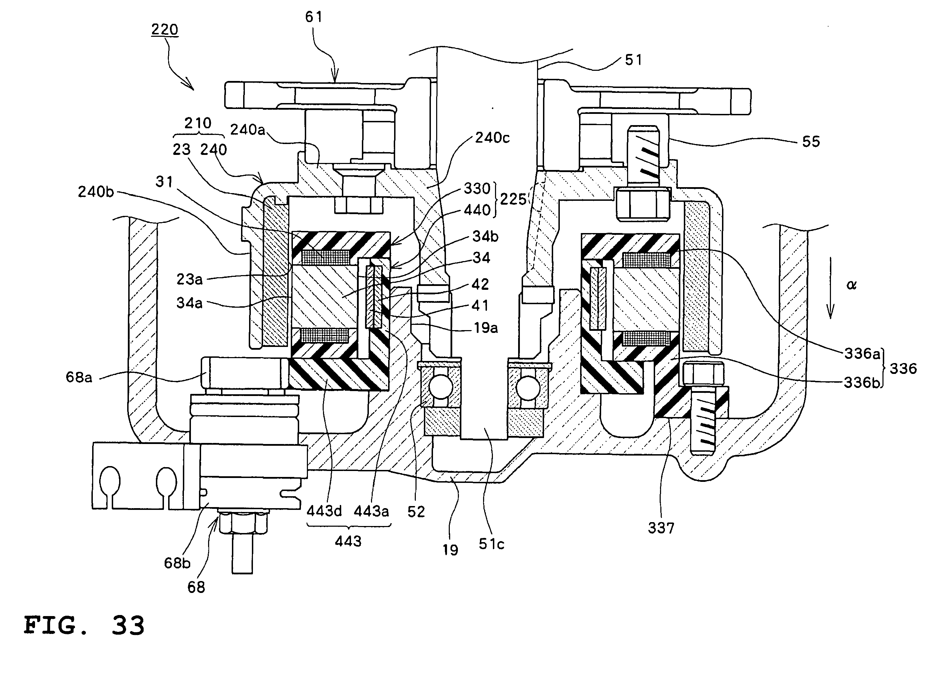

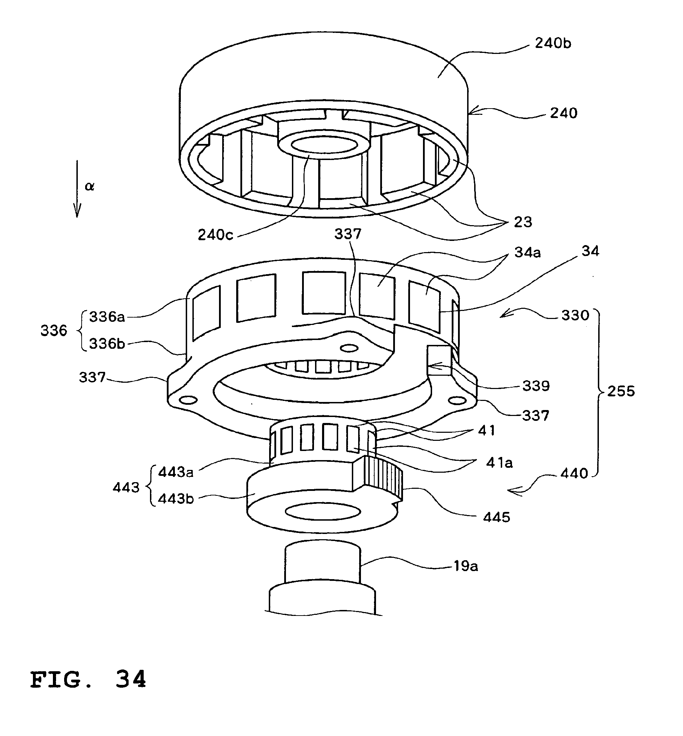

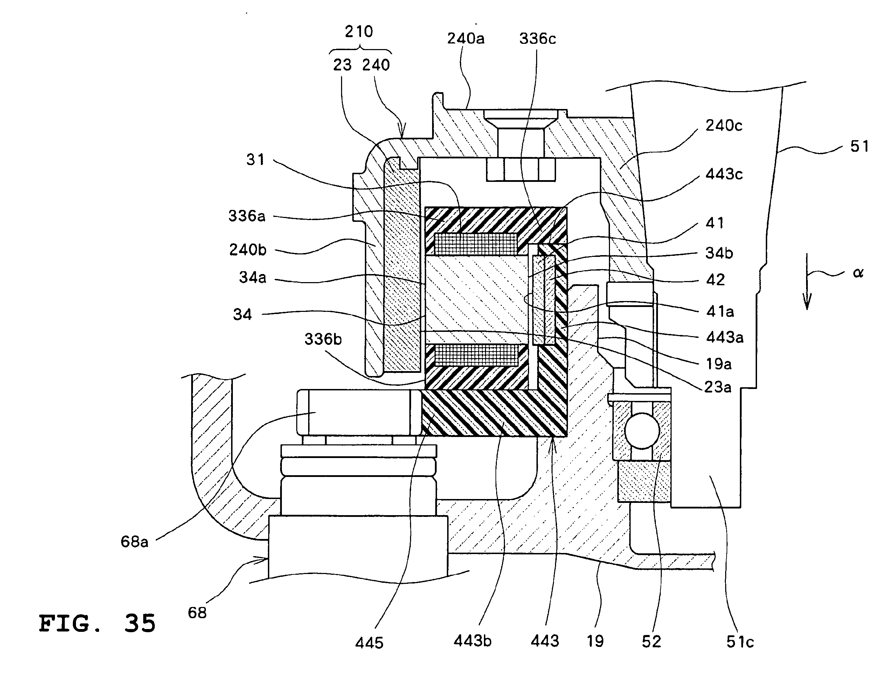

In the radial gap type rotary electric machine described above, the second stator 400 is rotatably supported by the first stator 300. The second stator 400, however, may be supported by the case cover 19 as in a rotary electric machine 220 shown in FIG. 33 to FIG. 35. The rotary electric machine 220 is described in detail below. FIG. 33 is a cross-sectional view of the rotary electric machine 220, FIG. 35 is an enlarged view of FIG. 33, and FIG. 34 is a schematic exploded perspective view of the rotary electric machine 220. The crankshaft 51 is omitted in FIG. 34, and the cylinder 50a and so on are omitted in FIG. 33. The same parts as those in the rotary electric machine 200 described above are designated in these drawings by the same reference numerals and their description is omitted.

The rotary electric machine 220 has a stator 225 as a magnetic field varying mechanism. The stator 225 has a first stator 330 and a second stator 440. The first stator 330 has a plurality of first teeth 34, and coils 31 wound around the first teeth 34. The first teeth 34 are arranged in a circle around the axis of the crankshaft 51 and radially opposed to the field magnets 23. The first teeth 34 and the coils 31 are molded by a resin part 336 made of a resin containing a lubricant.

The resin part 336 has a generally disk-shaped inner resin portion 336a inside the first teeth 34 and the coils 31 in the vehicle width direction, and a generally disk-shaped outer resin portion 336b outside the first teeth 34 and the coils 31 in the vehicle width direction.

The outer resin portion 336b extends outward in the vehicle width direction and has a plurality of engaging portions 337 protruding radially outward from the edge thereof. Each of the engaging portions 337 has a bolt hole. The engaging portions 337 are in contact with the case cover 19, and the case cover 19 has through holes at positions corresponding to the bolt holes of the engaging portions 337. Bolts are inserted in the through holes and the bolt holes corresponding to each other, and the first stator 330 is secured to the case cover 19 and cannot move in the rotating shaft direction and the radial direction. The part of the outer resin part 336b between two adjacent engaging portions 337 is cut out to form a cutout 339. A gear engaging portion 445 of the second stator 440 protrudes radially outward through the cutout 339. The gear engaging portion 445 is described in detail later.

The inner resin portion 336a has an annular stopper portion 336c with a diameter smaller than that of an inner peripheral surface including the end faces 34b radially inside the first teeth 34. An end of the second stator 440 is in contact with the stopper portion 336c and the second stator 440 is restricted from moving in the rotating shaft direction. Detailed description about the restriction of the movement of the second stator 440 in the rotating shaft direction is made later.

The second stator 440 has a plurality of second teeth 41 radially opposed to the first teeth 34, and a circular cylindrical base 42 for supporting the second teeth 41 in an annular configuration. The second teeth 41 and the base 42 are molded by a resin part 443 made of a resin containing a lubricant. The resin part 443 has a cylindrical resin portion 443a extending in the rotating shaft direction and a disk-shaped resin portion 443b having a disk-like shape and extending radially outward from the edge of the resin portion 443a outside in the vehicle width direction.

The second stator 440 is rotatably supported by the case cover 19. More specifically, the case cover 19 has a circular cylindrical rotation supporting portion 19a extending along the axis of rotation of the crankshaft 51. The diameter of the outer peripheral surface (rotation supporting surface) of the rotation supporting portion 19a and the diameter of the inner peripheral surface of the cylindrical resin portion 443a are equal to each other, and the entire inner peripheral surface of the cylindrical resin portion 443a is in contact with the outer peripheral surface of the rotation supporting portion 19a. The second stator 440 is thereby restricted from oscillating radially and supported for rotation about the axis of the crankshaft 51.

Since the first stator 330 is secured to the case cover 19, the distance between the end faces 34b of the first teeth 34 on the side of the second teeth and the end faces 41 a of the second teeth 41 on the side of the first teeth 34 is determined depending on the thickness of the cylindrical resin portion 443a.

An end 443c of the cylindrical resin portion 443a inside in the vehicle width direction is in contact with the stopper portion 336c of the first stator 330. Therefore, the second stator 440 is restricted from moving in the rotating shaft direction.

The disk-shaped resin portion 443b has a gear engaging portion 445 extending radially outward. The gear engaging portion 445 protrudes radially outward through the cutout 339 of the first stator 330 and is in meshing engagement with the gear portion 68a of the gear 68. The second stator 440 is rotated in forward or reverse when the motor 66 rotates in forward or reverse.

The magnetic field varying mechanism of the rotary electric machine 220 described above has a second stator 440 and a first stator 330, and the output characteristics of the rotary electric machine 220 can be changed by rotating the second stator 440. Since the entire inner peripheral surface of the second stator 440 is in contact with the outer peripheral surface (rotation supporting surface) of the rotation supporting portion 19a of the case cover 19 and the second teeth 41 cannot be oscillated radially, the output characteristics can be controlled precisely.

In the stator 225 described above, the second stator 440 is in direct contact with the outer peripheral surface of the rotation supporting portion 19a of the case cover 19. The second stator 440, however, may be rotatably supported via a bearing interposed between the inner peripheral surface of the second stator 440 and the rotation supporting portion 19a.

The description above discloses (amongst others) an embodiment of a saddle-type vehicle, which is a saddle-type vehicle including: a crankshaft; a crankcase housing the crankshaft; a crankcase cover attached to a side of the crankcase; and a rotary electric machine housed in the crankcase cover and connected to the crankshaft, in which the rotary electric machine has a magnetic field varying mechanism for varying the intensity of a magnetic field in the rotary electric machine to change the output characteristics of the rotary electric machine; in which the saddle-type vehicle further includes an operation mechanism connected to the magnetic field varying mechanism for transmitting power to operate the magnetic field varying mechanism, and in that the operation mechanism is supported by the crankcase cover.

In the present embodiment, the operation mechanism for operating the magnetic field varying mechanism is supported by the crankcase cover. Therefore, mounting of the operation mechanism has only a small effect on the shape and so on of the crankcase.

Here, the magnetic field varying mechanism is a mechanism for varying the intensity of a magnetic field in a rotary electric machine using power inputted from outside. For example, it is a mechanism for varying the intensity of the magnetic field by moving or rotating a member constituting a magnetic circuit such as rotor, stator, or member which produces a magnetic resistance along or around the rotating shaft. The operation mechanism is a mechanism connected to a member constituting the magnetic field varying mechanism such as rotor or stator for displacing the member and includes, for example, a gear, cam or spring. The saddle-type vehicle is a motorcycle (power-assisted bicycle (motorbike) or scooter), four-wheeled buggy (all terrain vehicle), snowmobile, or the like.

An embodiment may further include an actuator for generating the power to operate the magnetic field varying mechanism, and the actuator may be supported by the crankcase cover.

In this embodiment, the actuator is supported by the crankcase cover housing the rotary electric machine. Therefore, the power of the actuator can be transmitted to the magnetic field varying mechanism directly and efficiently. Also, the mechanism for operating the magnetic field varying mechanism including the actuator can be made up of a small number of parts. The actuator may be disposed inside the crankcase cover or outside the crankcase cover.

In this case, the operation mechanism may be mounted on an output shaft of the actuator. Then, the power of the actuator can be transmitted directly to the operation mechanism, and the magnetic field varying mechanism can be operated efficiently.

An embodiment may further include an actuator for generating the power to operate the magnetic field varying mechanism, and the power of the actuator is transmitted to the operation mechanism via a transmitting member.

In this embodiment, since the power of the actuator is transmitted to the operation mechanism via the transmitting member, the degree of freedom for the mounting position of the actuator is large.

In the case where the transmitting member is a wire, the degree of freedom for the mounting position of the actuator can be larger.

In a further embodiment, the magnetic field varying mechanism has a first stator and a second stator displaceable relative to the first stator to vary the intensity of the magnetic field.

According to this embodiment, since the stator has first and second stators, the output characteristics can be controlled more efficiently. For example, large power is necessary to displace a rotating rotor to change the output characteristics. In this embodiment, however, the output characteristics can be changed with smaller power by displacing the stator. In addition, since the stator has first and second stators and only the second stator is displaced, the output characteristics can be changed with smaller power than the power necessary to displace the entire stator.

This embodiment may further include a sensor for detecting the displacement of the second stator, the operation mechanism may be operatively linked with the second stator to transmit the power to displace the second stator, and the sensor may be attached to the operation mechanism to detect the displacement of the operation mechanism and output the displacement as information indicating the displacement of the second stator. Then, the displacement of the second stator can be detected precisely. In the case where the sensor is located upstream of the transmitting member in the path through which the power to displace the second stator is transmitted, the displacement cannot be detected precisely since the transmitting member is expanded or contracted. In this embodiment, however, since the displacement of the operation mechanism is detected directly, such a problem does not occur.

In this embodiment, the crankcase cover may have a window through which the displacement of the second stator can be visually checked. Then, it is possible to monitor whether the second stator is displaced properly or to check whether the second stator is in an appropriate position when it is attached.

In this embodiment, the crankcase cover may have a supporting portion for displaceably supporting the second stator. Then, the second stator can be displaced precisely. The supporting portion is a member for rotatably supporting the second stator or supporting the second stator for sliding movement along the rotating shaft.

In this embodiment, the operation mechanism is operatively linked with the second stator and transmits the power to displace the second stator, and the operation mechanism has a mark indicating a reference position within the range of movement of the operation mechanism. Then, it is possible to check whether the operation mechanism is placed in an appropriate position easily when the saddle-type vehicle is assembled.

The description above discloses, in order to provide a saddle-type vehicle provided with a rotary electric machine which has no large effect on the layout of the crankcase and the output characteristics of which can be changed by mechanically changing the intensity of magnetic field, an embodiment of a motorcycle 1, which has a crankcase 50d housing a crankshaft 51; a crankcase cover 19 attached to a side of the crankcase 50d; and a rotary electric machine 20 housed in the crankcase cover 19 and connected to the crankshaft 51, wherein the rotary electric machine 20 has a magnetic field varying mechanism for varying the intensity of a magnetic field in the rotary electric machine 20 to change the output characteristics of the rotary electric machine 20, the motorcycle 1 has an operation mechanism 68 connected to the magnetic field varying mechanism for transmitting power to operate the magnetic field varying mechanism, and the operation mechanism 68 is supported by the crankcase cover 19.

The description discloses, according to a preferred first aspect, a saddle-type vehicle comprising: a crankshaft; a crankcase housing the crankshaft; a crankcase cover attached to a side of the crankcase; and a rotary electric machine housed in the crankcase cover and connected to the crankshaft, wherein the rotary electric machine has a magnetic field varying mechanism for varying the intensity of a magnetic field in the rotary electric machine to change the output characteristics of the rotary electric machine; wherein the saddle-type vehicle further comprises an operation mechanism connected to the magnetic field varying mechanism for transmitting power to operate the magnetic field varying mechanism, and wherein the operation mechanism is supported by the crankcase cover.

A preferred second aspect further comprises an actuator for generating the power to operate the magnetic field varying mechanism, wherein the actuator is supported by the crankcase cover.

According to a preferred third aspect, the operation mechanism is mounted on an output shaft of the actuator.

A preferred fourth aspect further comprises an actuator for generating the power to operate the magnetic field varying mechanism, wherein the power of the actuator is transmitted to the operation mechanism via a transmitting member.

According to a preferred fifth aspect, the transmitting member is a wire.

According to a preferred sixth aspect, the magnetic field varying mechanism has a first stator and a second stator displaceable relative to the first stator to vary the intensity of the magnetic field.

A preferred seventh aspect further comprises a sensor for detecting the displacement of the second stator, wherein the operation mechanism is operatively linked with the second stator to transmit the power to displace the second stator, and wherein the sensor is attached to the operation mechanism to detect the displacement of the operation mechanism and outputs the displacement as information indicating the displacement of the second stator.

According to a preferred eighth aspect, the crankcase cover has a window through which the displacement of the second stator can be visually checked.

According to a preferred ninth aspect, the crankcase cover has a supporting portion for displaceably supporting the second stator.

According to a preferred tenth aspect, the operation mechanism is operatively linked with the second stator to transmit the power to displace the second stator, and wherein the operation mechanism has a mark indicating a reference position within the range of movement of the operation mechanism.

## Claims

1. Saddle-type vehicle comprising:
a crankshaft;
a crankcase housing the crankshaft;
a crankcase cover attached to a side of the crankcase; and
a rotary electric machine housed in the crankcase cover and connected to the crankshaft,
wherein the rotary electric machine has a magnetic field varying mechanism for varying the intensity of a magnetic field in the rotary electric machine to change the output characteristics of the rotary electric machine;
wherein the saddle-type vehicle further comprises an operation mechanism connected to the magnetic field varying mechanism for transmitting power to operate the magnetic field varying mechanism, and
wherein the operation mechanism is supported by the crankcase cover.

2. Saddle-type vehicle according to claim 1, further comprising an actuator for generating the power to operate the magnetic field varying mechanism.

3. Saddle-type vehicle according to claim 2, wherein the actuator is supported by the crankcase cover.

4. Saddle-type vehicle according to claim 2 or 3, wherein the power of the actuator is transmitted to the operation mechanism via a transmitting member.

5. Saddle-type vehicle according to one of the claims 2 to 4, wherein the operation mechanism is mounted on an output shaft of the actuator.

6. Saddle-type vehicle according to claim 4 or 5, wherein the transmitting member is a wire.

7. Saddle-type vehicle according to one of the claims 1 to 6, wherein the magnetic field varying mechanism has a first stator and a second stator,
wherein the second stator is displaceable relative to the first stator to vary the intensity of the magnetic field.

8. Saddle-type vehicle according to claim 7, wherein the operation mechanism is operatively linked with the second stator to transmit the power to displace the second stator.

9. Saddle-type vehicle according to one of the claims 1 to 8, further comprising a sensor for detecting the displacement of the second stator, wherein the sensor is attached to the operation mechanism to detect the displacement of the operation mechanism and outputs the displacement as information indicating the displacement of the second stator.

10. Saddle-type vehicle according to claim 8 or 9, wherein the operation mechanism has a mark indicating a reference position within the range of movement of the operation mechanism.

11. Saddle-type vehicle according to one of the claims 7 to 10, wherein the crankcase cover has a window through which the displacement of the second stator can be visually checked.

12. Saddle-type vehicle according to one of the claims 7 to 11, wherein the crankcase cover has a supporting portion for displaceably supporting the second stator.
